# EUROPEAN PATENT SPECIFICATION

(11) **EP 1 367 785 B1**
(45) Date of publication and mention of the grant of the patent: **31.08.2011**
(21) Application number: 03253294.7
(22) Date of filing: 27.05.2003
(51) Int. Cl.: H04N 1/00, H04L 12/58

(54) **A network image forming apparatus system and a method of registering the image forming apparatus for use in a network**
Bilderzeugungsvorrichtung und Verfahren zur Anmeldung der Bilderzeugungsvorrichtung zur Verwendung in einem Netzwerk
Dispositif de formation d'images et procédé d'enregistrement du dispositif de formation d'images à utiliser dans un réseau

(30) Priority: 31.05.2002 JP 2002159624; 31.05.2002 JP 2002159626; 31.05.2002 JP 2002159627
(43) Date of publication of application: 03.12.2003
(73) Proprietor: KONICA CORPORATION, Tokyo (JP)
(72) Inventor: Haga, Tatsuyoshi, c/o Konica Corporation, Hachioji-shi, Tokyo 192-8505 (JP)
(74) Representative: Brown, George Laurence

(56) References cited:
- EP-A- 1 017 225
- WO-A-99/34312
- US-A- 5 754 778
- US-A1- 2002 004 837
- US-A1- 2002 027 677
- US-A1- 2002 051 146
- US-A1- 2002 059 361
- US-A1- 2002 065 891
- US-B1- 6 333 791

## Description

### BACKGROUND OF THE INVENTION

The present invention relates to a network image forming apparatus system including the image forming apparatus capable of communicating with a predetermined network.

Further, the present invention relates to a network image forming apparatus including: transceiver means for transmitting and receiving electronic mail via a mail server arranged in a predetermined network; image forming means for forming an image; and image output means for outputting the image formed by the aforementioned image forming means.

Still further, the present invention relates to a network image forming apparatus that provides remote control from the outside through operation in conformity to a predetermined command described in electronic mail including the predetermined command received by transceiver means.

In an image forming apparatus linked to a network, electronic mail is used for a wide variety of applications, including remote management, error report, status report and operation starting instruction. For remote management of an image forming apparatus, the Japanese Application Patent Laid-Open Publication No. Hei 08-331267 discloses remote management method and communication system thereof wherein a monitored apparatus such as a digital copying machine, fax machine and printer is subjected to diagnosis and control via the network by a monitoring apparatus including a computer.

For the error report in an image forming apparatus, the Japanese Application Patent Laid-Open Publication No. Hei 10-17202 discloses an information reporting method and apparatus thereof for using an external apparatus such as a computer to send paper run-out report for output equipment including a printer, copying machine and fax machine, request for repair and error information.

With regard to status report in an image forming apparatus, the Japanese Application Patent Laid-Open Publication No. Hei 10-207304 discloses an image forming apparatus consisting of self-diagnostic means for self-diagnosing failures of an image forming apparatus, a registration means for preliminary registration of the destinations for report, and reporting means for reporting the results of diagnosis to the destinations registered in advance.

With respect to the operation starting instruction of an image forming apparatus, the Japanese Application Patent Laid-Open Publication No. 2001-177672 shows an image reading system wherein an instruction is given to an image forming apparatus to start scanning in automatic readout mode.

However, when electronic mail is used in the aforementioned prior art image forming apparatus, it is necessary to set many connection parameters including information on mail server (IP address, user authentication). When setting these parameters, there is no way of checking whether or not the image forming apparatus ensures correct transmission and reception of electronic mail. There is no knowing whether or not setting of connection parameters is correct, or where an error is located when the parameter setting is incorrect. If incorrect setting of a connection parameter is overlooked, the image forming apparatus continues operation on the assumption that the set parameter is correct. In practice, however, electronic mail cannot be sent correctly. Depending on the function of the mail, an attempt at transmission or reception continues infinitely, with the result that the mail server, image forming apparatus and network are adversely affected, according to the prior art.

In an image forming apparatus having a function of self-transmission and reception of electronic mail, an electronic mail parameter checking function and its own status confirmation function are used. During the time from reception of electronic mail to transmission thereof, electronic mail is distributed through a great variety of routes over the Internet between a transmit mail server and a receive mail server. Accordingly, depending on the network environment, electronic mail may be sent to the receive mail server. If reception of electronic mail cannot be confirmed, there is no knowing if this is caused by delay or incorrect parameter setting. This has created a problem in the prior art.

In the prior art image forming apparatus, when changing the connection parameter setting and validating the change, the image forming apparatus must be rebooted in many cases. In such cases, user's decision has been essential. However, information on whether or not rebooting of an image forming apparatus is necessary in order to validate the changed parameter is described in the Manual or similar documents, and most users do not have this information. When the connection parameter (IP address, etc.) of an image forming apparatus has to be changed, it has not been easy for a user to determine whether or not the image forming apparatus should be rebooted, according to the prior art.

The following techniques have been used in the image forming apparatus linked to the general-purpose network: (1) a scan-to-e-mail technique wherein the document having been read is converted into data and is sent as electronic mail between the image forming apparatus and external terminal for manager (for example) (Japanese Application Patent Laid-Open Publication No. 2001-177672); (2) an error report technique for ensuring that a failure having occurred in an image forming apparatus is evaluated on the manager's terminal (Japanese Application Patent Laid-Open Publication No. Hei 10-17202); (3) status report technique for evaluation of the status of the image forming apparatus at the manager's terminal (Japanese Application Patent Laid-Open Publication No. Hei 10-207304; and (4) remote management technique for remote operation of the image forming apparatus from the manager's terminal (Japanese Application Patent Laid-Open Publication No. Hei 08-331267). These management techniques using electronic mail services on the Internet have come into widespread use.

When remote control is performed in the aforementioned management system, electronic mail is sent and received by each image forming apparatus. This means that an unspecified number of the pieces of electronic mail may be sent to the image forming apparatus.

Of these pieces of electronic mail, illegal mail having a great data size in particular will adversely affect the communication traffic of the network involving the image forming apparatus that receives this mail. Not only that, this requires analysis of a massive amounts of received data, with the result that a great load is imposed on the image forming apparatus.

When illegal mail of a greater data size has been received, a great volume of the memory must be wasted, and this has created a problem.

In order to reduce power consumption and to decrease load of communication traffic, it is common practice to receive electronic mail from the mail server at a predetermined interval. When mail has been received, however, a large quantity of electronic mail is received by the mail server in some cases. In such cases, a large quantity of data must be processed at one time. This results in an increased load on the communication traffic on the temporary basis, and there will be an increased load on the image forming apparatus in order to process a large quantity of electronic mail. This has created the same problem as mentioned above.

In the aforementioned management system, electronic mail is used to achieve remote control for an image forming apparatus. In this case, electronic mail is sent to the image forming apparatus as an object of this remote control; then the image forming apparatus receives, analyzes and executes this electronic mail.

At present, remote control cannot be achieved without having information on the command described in the electronic mail for the aforementioned remote control, so there is no restriction to an access from a third party unauthorized to execute a command. When having received electronic mail sent from a third party who is apparently not authorized to execute a command, or such illegal mail as electronic mail containing an unconceivable command, there has been no means of automatically notifying an external manager of the reception of such an illegal mail.

However, amid the recent development and spread of the Internet technologies, there has been a strong demand for enhanced security on the Internet and quick response to an illegal operation.

US-2002/006589A1 discusses a system and method for detecting incorrect email addresses in an outgoing email. When an email is sent, the system checks the domain name against a table of domain names created by storing domain names from which incoming emails are received. If the domain name is not found in the table, the user is prompted to confirm the email address.

### SUMMARY OF THE INVENTION

The present invention has been made in an effort to solve the aforementioned problems. The first object of the present invention is to provide a network image forming apparatus system and a method of registering the image forming apparatus for use in the network using this system; wherein the aforementioned system comprises: means for verifying to determine if an image forming apparatus is capable of receiving electronic mail correctly or not; and means for displaying the result of this verification, and, if setting of a connection parameter is incorrect, displaying a particular item of incorrect setting and a way of correcting this incorrect setting, Self-transmission and reception may be possible without being affected by delay in distribution of electronic mail to a mail server. Said display means may show for a user a message indicating the necessity of rebooting if there is any change in the connection parameter requiring rebooting of the image forming apparatus.

Accordingly, to overcome the cited shortcoming, the abovementioned object of the present invention can be attained by an image-forming system as defined in appended claim 1 and by an image-forming method as defined in appended claim 8. Optional features of the invention are defined in appended claims 2-7 and 9-13.

A system for forming an image and communicating electronic mails, including a transmit mail and a receive mail, through a network, comprising:
a server, that includes a transmit-mail storage for temporarily storing said transmit mail to be transmitted via said network, and a receive-mail storage for temporarily storing said receive mail received via said network; and
an image-forming apparatus, that includes a transceiver section for transmitting a transmit data set to be transmitted on said transmit mail and for receiving a receive data set received on said receive mail, and a data-processing section for processing said receive data set received by said transceiver section;
wherein said server is coupled to both said network and said image-forming apparatus, so as to communicate said transmit data set and said receive data set on said electronic mails through said network; and
wherein said image-forming apparatus further includes:
   an operating section to manually input a plurality of connecting parameters;
   a connecting data storage to store said plurality of connecting parameters therein; and
   a displaying section to display said plurality of connecting parameters inputted by said operating section; and
      wherein said data-processing section determines whether or not each of said plurality of connecting parameters is effective by monitoring a connecting status between said transceiver section and said server, and sends first displaying data for displaying a result determined by said data-processing section to said displaying section, which displays said result on a displaying screen; and
      wherein, when said data-processing section determines that a specific one of said connecting parameters is ineffective, said data-processing section also sends a second displaying data for displaying a second message urging a reentry of a new connecting parameter corresponding to a cause of an error as a substitute for said specific one to said displaying section, so that said displaying section displays said second message on said displaying screen, as needed wherein said data-processing section determines whether or not said server can recognize a new connecting parameter, reentered from said operating section, without rebooting said image-forming apparatus; and wherein, when said data-processing section determines that said server cannot recognize said new connecting parameter without rebooting said image-forming apparatus, said data-processing section sends a fourth displaying data, for displaying a fourth message indicating a necessity of rebooting said image-forming apparatus, to said displaying section, so that said displaying section displays said fourth message on said displaying screen.

A method for registering an image-forming apparatus into a network of a system for forming an image and communicating electronic mails, including a transmit mail and a receive mail, through said network, and said system comprising a server that includes a transmit-mail storage for temporarily storing said transmit mail to be transmitted via said network and a receive-mail storage for temporarily storing said receive mail received via said network, and said image-forming apparatus that includes a transceiver section for transmitting a transmit data set to be transmitted on said transmit mail and for receiving a receive data set received on said receive mail and a data-processing section for processing said receive data set received by said transceiver section, said method comprising the steps of:
manually inputting connecting parameters for connecting said transceiver section with both said transmit-mail storage and said receive-mail storage of said server;
determining whether or not each of said connecting parameters is effective by monitoring a connecting status between said transceiver section and said server; and
displaying a first message indicating a result determined in said determining step on a displaying screen; and
displaying a second message urging a reentry of said connecting parameter corresponding to a cause of an error as a substitute for a specific one of said connecting parameters, when it is determined that said specific one is ineffective in said determining step;
when any one of said connecting parameters, which was once inputted, is changed to said new connecting parameter, further comprising the steps of:
   inputting said new connecting parameter;
   determining whether or not said server can recognize said new connecting parameter, without rebooting said image-forming apparatus; and
   displaying a fourth message indicating a necessity of rebooting said image-forming apparatus on said displaying screen, when determining that said server cannot recognize said new connecting parameter without rebooting said image-forming apparatus.

### BRIEF DESCRIPTION OF THE DRAWINGS

Other objects and advantages of the present invention will become apparent upon reading the following detailed description and upon reference to the drawings in which:
Fig. 1 is a block diagram representing one embodiment of the network image forming apparatus system according to the present invention;
Fig. 2 is a flow chart representing a first embodiment of the method of registering an image forming apparatus for use in a network according to the present invention;
Fig. 3 is a drawing representing an embodiment of the connection parameter input screen to be displayed in a display section;
Fig. 4(a), Fig. 4(b) and Fig. 4(c) are drawings representing an embodiment of the confirmation test OK screen to be displayed on the display section;
Fig. 5(a), Fig. 5(b) and Fig. 5(c) are drawings representing another embodiment of the confirmation test NG screen to be displayed on the display section;
Fig. 6(a), Fig. 6(b) and Fig. 6(c) are drawings representing a further embodiment of the confirmation test NG screen to be displayed on the display section;
Fig. 7 is a drawing representing an embodiment of a screen for prompting reentry of a connection parameter to be displayed on the display section;
Fig. 8 is a flow chart representing a second embodiment of the method of registering an image forming apparatus for use in a network according to the present invention;
Fig. 9 is a flow chart representing a third embodiment of the method of registering an image forming apparatus for use in a network according to the present invention;
Fig. 10 is a flow chart representing a fourth embodiment of the method of registering an image forming apparatus for use in a network according to the present invention;
Fig. 11 is a flow chart representing a fifth embodiment of the method of registering an image forming apparatus for use in a network according to the present invention;
Fig. 12 is a flow chart representing a sixth embodiment of the method of registering an image forming apparatus for use in a network according to the present invention;
Fig. 13 is a drawing representing an embodiment of a screen for prompting rebooting of the image forming apparatus to be displayed on the display section;
Fig. 14 is a flow chart representing a seventh embodiment of the method of registering an image forming apparatus for use in a network according to the present invention;
Fig. 15 is a flow chart representing an eighth embodiment of the method of registering an image forming apparatus for use in a network according to the present invention;
Fig. 16 is a flow chart representing a ninth embodiment of the method of registering an image forming apparatus for use in a network according to the present invention;
Fig. 17 is a flow chart representing a tenth embodiment of the method of registering an image forming apparatus for use in a network according to the present invention;
Fig. 18 is a flow chart representing an eleventh embodiment of the method of registering an image forming apparatus for use in a network according to the present invention;

### DETAILED DESCRIPTION OF THE PREFERRED EMBODIMENT

Referring to drawings, the following describes a network image forming apparatus system and a method of

registering the image forming apparatus for use in a network according to the present invention.

### <Network image forming apparatus system>

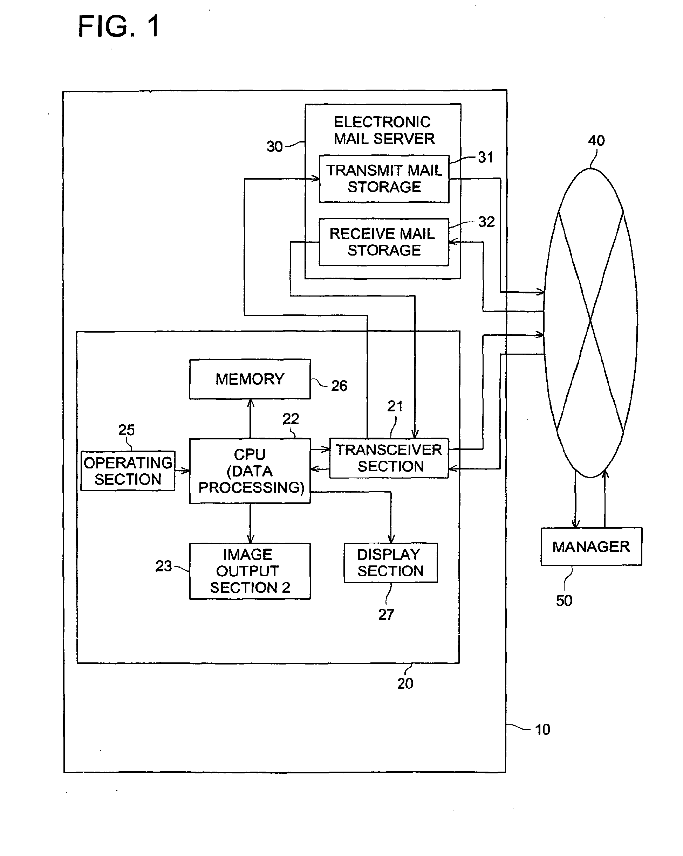

As shown in Fig. 1, a network image forming apparatus system according to the present invention is embodied in the network image forming apparatus system 20 basically comprising: an image forming apparatus 20 further including: a transceiver section 21 as transceiver means for communications with a predetermined network, and a data processing section (CPU: Central Processing Unit) 22 as data processing means for obtaining image data from the communication data received from the aforementioned transceiver means; and an electronic mail server further including: a transmit mail storage 31 for temporarily storing electronic mail sent from the transceiver means to the network, wherein the transmit mail storage 31 is coupled to both the network and transceiver means of the image forming apparatus for communications with the network, and a receive mail storage 32 for temporarily storing electronic mail sent from the network to the transceiver means.

As shown in Fig. 1, the network image forming apparatus system 10 is connected to a manager through an adequate network 40, for example, via the Internet. The manager 50 is connected to the network 40 through an information terminal apparatus (not illustrated), for example, a personal computer or a cellular phone. Either wired or wireless means may be used for connection between this information terminal apparatus and network 40. The manager is not subjected to any restriction; it includes a parameter setting personnel (hereinafter abbreviated as "setting person") to be described later and a maintenance manager of the image forming apparatus 20.

Further, the image forming apparatus 20 forms images according to the aforementioned image data, and is further provided with: an image output section 23 as image output means for producing an image; an operating section 25 as an operating means for setting and inputting a predetermined connection parameter for connecting the transceiver section 21 to both storages of the electronic mail server 30; a memory 26 as memory means for memorizing the connection parameter set and entered from the operating section; and a display section 27 for displaying the setting and entry status by the operating section 24.

The aforementioned image forming apparatus 20 is not subjected to any restriction if it is provided with these components, namely, a transceiver section 21, data processing section (CPU) 22, an image output section 23, an operating section 25, memory 26 and display section 27. To put it more specifically, the image forming apparatus 20 can be a copying machine, fax machine, scanner or composite thereto (hereinafter also referred to as "main unit") provided with the aforementioned components. An information terminal apparatus and main unit can be connected with each other to permit exchange of data. To put it more specifically, an information terminal apparatus and main unit are connected through such an information communication network as the LAN (Local Area Network) or WAN (Wide Area Network). This information terminal apparatus and main unit can be connected with each other either by wired means or wireless means. Alternatively, a browser may be used for this connection.

Further, the transceiver section 21 sends the electronic mail created by the operation from the operating section 25 and sent from the data processing section (CPU), to the transmit mail storage 31 of an electronic mail server 30 to be described later, and captures the electronic mail stored in the receive mail storage 32. As will be described later, when setting the connection parameter, the transceiver section 21 sends the confirmation mail created by the data processing section (CPU), to the electronic mail server 30 from this connection parameter having been set and entered. Further, when receiving this confirmation mail again, it receives the returned confirmation mail from the electronic mail server 30.

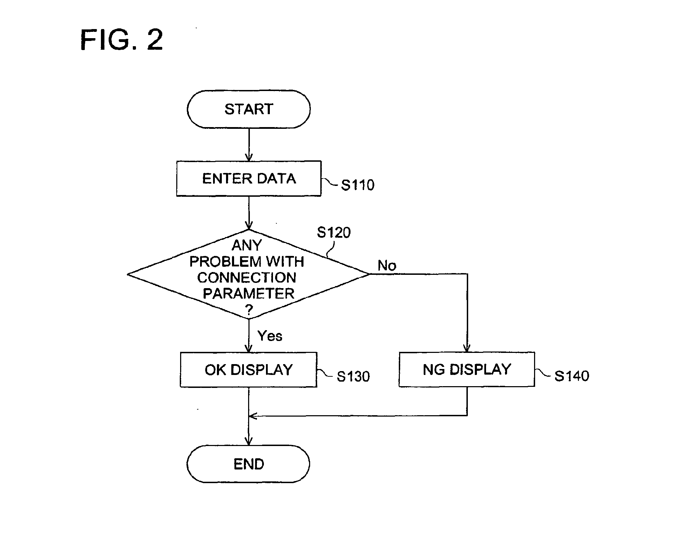

The data processing section (CPU) 22 controls the sections 21, 23, 24, 25, 26 and 27 according to the predetermined program stored in the memory 26 to be described later, namely, the control program shown in the flow charts Figs. 2, 8 to 12, 14 to 18.

In addition to forming an image from the general image data, an image output section 23 forms as an image the information that should be displayed for the setting person in the control of the data processing section (CPU) 22, and produces this image according to the request from the data processing section (CPU) 22. To put it more specifically, it is printed out in paper.

The operating section 25 is not subjected to any restriction if it serves to enter information; it can be a keyboard, numeric keypad or mouse, for example. Further, the operating section 25 can be an operating section formed integrally with the main unit, and/or an operating section of the aforementioned information terminal apparatus connected with the main unit.

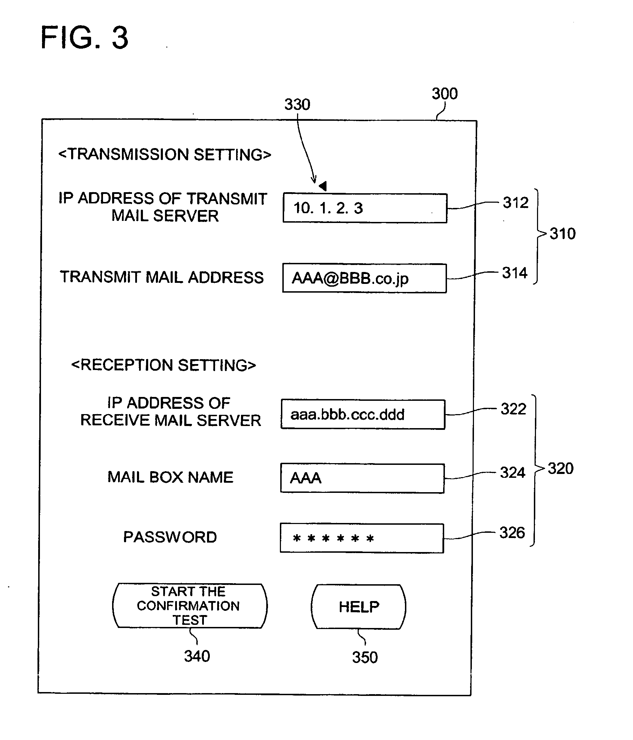

In addition to memorizing the information for inducing creation of electronic mail, the memory 26 memories the information for inducing setting of the connection parameter to be described later, namely, confirmation screen shown in Figs. 3 to 7 and 13.

The display section 27 is a screen of the aforementioned main unit and/or the screen of the information terminal apparatus connected to the main unit. It displays the confirmation screen shown in Figs. 3 to 7 and 13. The image output section 23 and display section 27 can be made integral with each other.

The electronic mail server 30 also serves both as a transmit mail server and a receive mail server, and is provided with a transmit mail storage 31 and a receive mail storage 32 corresponding to respective functions.

The electronic mail server 30 is connected in such a way as to allow transmission and reception of electronic mail with the electronic mail server 30. To put it more specifically, it is connected via the information communication network such as LAN (Local Area Network) and WAN (Wide Area Network). Further, the image forming apparatus 20 is directly connected to the network 40 to exchange electronic mail with the electronic mail server 30 present in the network 40.

The transmit mail storage 31 temporarily stores the electronic mail (including the confirmation electronic mail) created by the image forming apparatus 20 and sent to the electronic mail server 30 through the transceiver section 21, and sends it thereafter. In the meantime, the receive mail storage 32 is provided preferably for each image forming apparatus. When having again received the electronic mail sent to the electronic mail server 30 through the network 40 and the confirmation electronic mail, it receives the confirmation mail and stores it temporarily. Then it sends the confirmation mail to the transceiver section 21 in response to the request of the data processing section (CPU) 22.

Further, the confirmation mail can be sent to the manager 50. In this case, the confirmation mail is sent to the information terminal apparatus (not illustrated) owned by the manager 50 through the network through the personal computer and cellular phone, for example.

### <Method of registering an image forming apparatus for use in a network>

This is the method of registering an image forming apparatus 20 for use in a network according to the present invention in a system 10 comprising: an image forming apparatus 20 further including: a transceiver section 21 for communications with a predetermined network, and a data processing section 22 for processing the communication data received from the aforementioned transceiver section 21; and an electronic mail server further including: a transmit mail storage 31 for temporarily storing electronic mail sent from the transceiver section 21 to the network 40, wherein the transmit mail storage 31 is coupled to both the network and transceiver section 21 of the image forming apparatus 20 for communications with the network, and a receive mail storage 32 for temporarily storing electronic mail sent from the network to the transceiver section 21.

The following describes each embodiment with reference to drawings.

### First Embodiment

As shown in Fig. 2, the first embodiment of the <Method of registering an image forming apparatus for use in a network> according to the present invention comprises: an input step (Step S110) for prompting a predetermined connection parameter to be set and entered to connect the transceiver section 21 with both storages (31) and (32) of the electronic mail server 30; a parameter determining step (Step S120) for determining if the connection parameter set and entered in the aforementioned input step is valid or not, by monitoring the connection status of the transceiver section 21 and transmit mail storage 31 and/or connection status of the transceiver section 21 and receive mail storage 32 using the connection parameter at the time of setting and inputting in the input step; and display steps (Steps S130 and 140) for displaying the result of evaluation in the aforementioned parameter determining step, and for displaying a message to prompt reentry of the connection parameter in the operating means as required, if the connection parameter has been determined not valid.

As shown in Fig. 2, the setting person uses the operating section 25 to enter the connection parameter data in Step S110.

To put it more specifically, the data input screen 300 is displayed on the display section 27. On the data input screen 300 shown in Fig. 3 are displayed a transmit set/input window 310, a receive set/input window 320, a select cursor 330, a confirmation test start button 340 and a HELP button 350.

The transmit set/input window 310 consists of an IP address input window 312 for entering the address of the transmit mail server portion inside the electronic mail server 30, and a transmit mail input window 314 for entering an address for specifying the transmit mail storage 31 in the transmit mail server.

In the meantime, the receive set/input window 320 consists of: an IP address input window 322 for entering the address of the receive mail server portion inside the electronic mail server 30, a mail box name input window 324 for entering the mail box name to specify the receive mail storage 32 in the mail server, and a transmit mail input window 314 for entering an address for specifying the transmit mail storage 31 in the transmit mail server.

The setting person uses the select cursor 330 displayed on the data input screen 300 and select a desired input window to click the input window. This procedure causes the input window to be set to the input state. Then the setting person enters a predetermined parameter from the operating section 25. In this manner, predetermined parameters are entered into all the aforementioned window from the operating section 25.

Upon completion of the entry of the aforementioned connection parameters, the setting person clicks the confirmation test start button 340. If there is any an unclear point or questions, the setting person clicks the HELP button 350.

When the confirmation test start button 340 has been clicked, the system proceeds to the Step S120.

In Step S120, the connection status of the transceiver section 21 and transmit mail storage 31 and/or connection status of the transceiver section 21 and receive mail storage 32 are monitored using the connection parameter set and entered in Step S110, thereby determining if the connection parameter set and entered in the aforementioned input step is valid or not. To put it more specifically, the confirmation mail is sent to its own receive mail storage 32 or manager 50 to determine if the confirmation mail has been rejected or not.

Here the "the confirmation mail has been rejected" occurs in cases where: Connection has failed due to an error in setting the IP address of the transmit mail server; Transmission has been rejected from the transmit mail server; The transmit parameter (sender's mail address, etc.) is illegal; Connection has failed due to an error in setting the IP address of the receive mail server; Reception has been rejected from the receive mail server; Receive parameter (user's name, password, etc.) is illegal; The transmitted confirmation mail has not yet reached the receive mail storage 32, or The confirmation mail cannot be received by the receive mail storage 32, for example, because the contents of confirmation mail are incorrect.

When the result of evaluation is YES, namely when the connection parameter has been determined to be valid, the system goes to Step S130. If the result of evaluation is NO, namely when the connection parameter has been determined to be invalid, the system goes to Step S140.

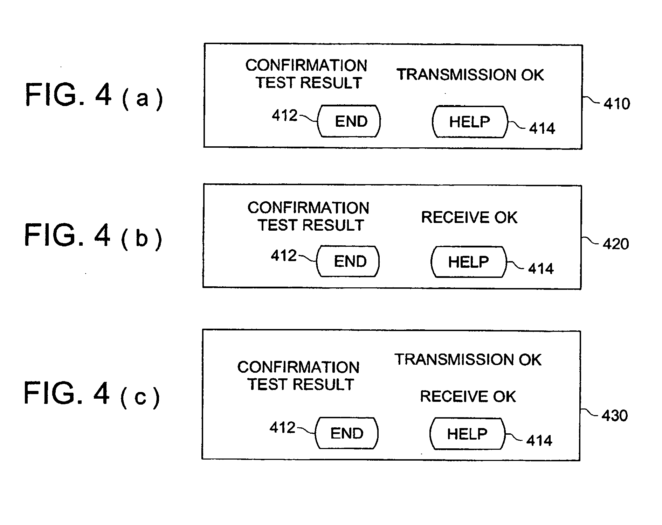

In Step S130, the OK screen is displayed on the display section 27 to indicate that the connection is satisfactory (OK). To put it more specifically, the confirmation screens 410, 420 and 430 in Fig. 4(a) to Fig. 4(c) are displayed on the display section 27.

The confirmation screen 410 shown in Fig. 4(a) is an OK display screen for the cases where connection is confirmed by sending the confirmation mail to its own receive mail storage 32 or development apparatus 50. To be more specific, it is displayed when the connection parameter entered in the transmit set/input window 310 illustrated in Fig. 3 has been evaluated as valid. The END button 412 and HELP button 414 are displayed also on the confirmation screen 410.

The confirmation screen 420 shown in Fig. 4(b) is an OK screen for the cases where confirmation has been made to determine whether or not the image forming apparatus 20 can access its own receive mail storage 32, independently of the confirmation electronic mail. In other words, it is displayed when the connection parameter entered in the receive set/input window 320 shown in Fig. 3 has been evaluated as valid. The END button 412 and HELP button 414 are also indicated on the confirmation screen 420.

The confirmation screen 430 in Fig. 4(c)is an OK screen for the cases where connection has been confirmed by sending the confirmation mail to its own receive mail storage 32 and by receiving this confirmation electronic mail. To be more specific, it is displayed when the connection parameter entered in the transmit set/input window 310 illustrated in Fig. 3 has been evaluated as valid, and the connection parameter entered in the receive set/input window 320 has been evaluated as valid. The END button 412 and HELP button 414 are also displayed on the confirmation screen 430.

As described above, confirmation screens 410, 420 and 430 are displayed on the display section 27, and the setting person confirms that aforementioned connection status is satisfactory and clicks the END button 412. This procedure terminates the registration of the image forming apparatus for use in the network. If there is any unclear points or questions, the setting person clicks the HELP button 414.

When the result of evaluation in Step S120 is NO, namely when the connection parameter has been determined to be invalid, the system goes to Step S140.

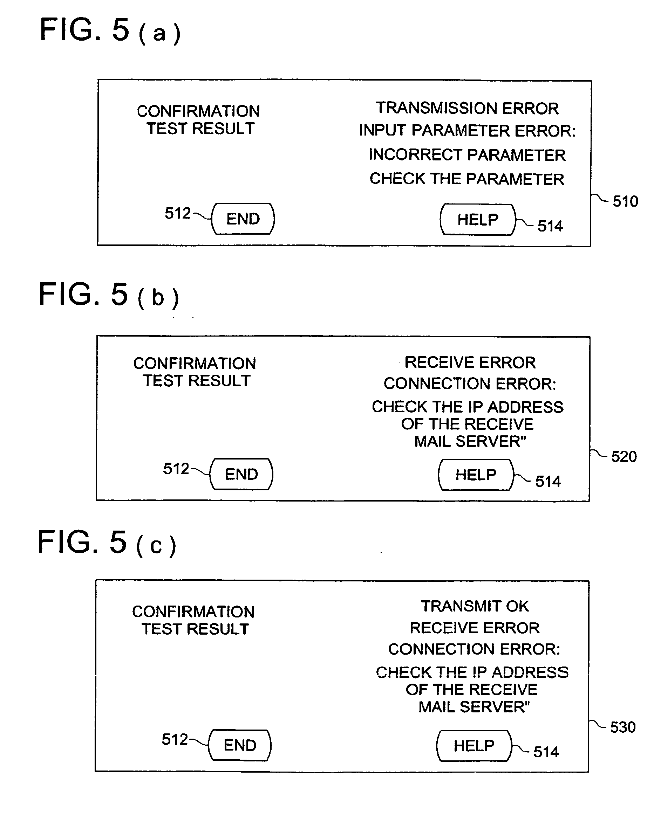

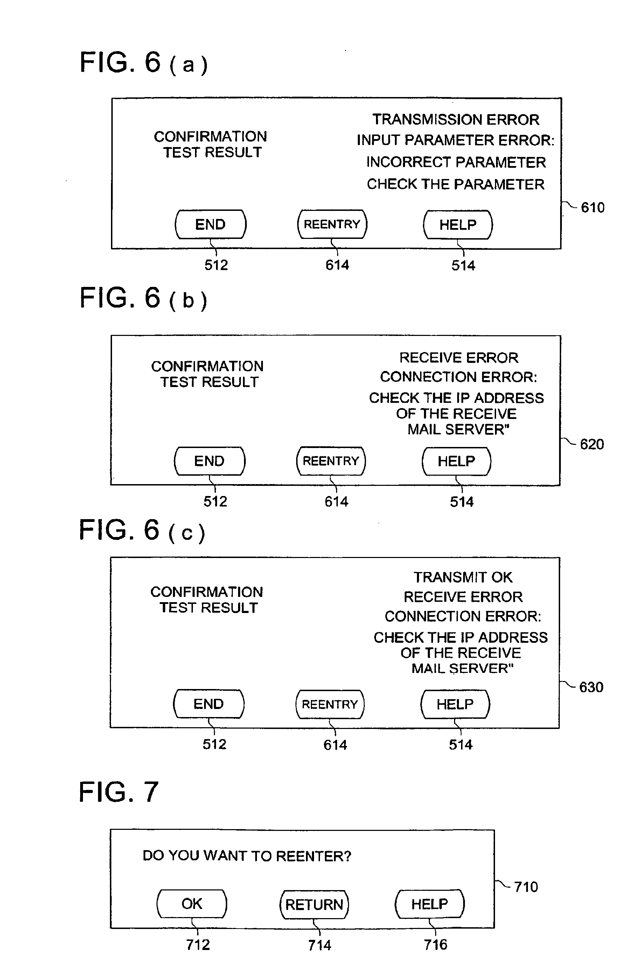

In Step S140, the NG screen is displayed on the display section 27 to indicate that the connection is faulty (NG).
To put it more specifically, the confirmation screens 510, 520, 530 in Fig. 5(a) to Fig. 5(c), 610, 620 and 630 in Fig. 6(a) to Fig. 6(c) are displayed on the display section 27.

The confirmation screen 510 shown in Fig. 5(a) is an NG screen for the cases where the confirmation mail has failed to be sent to the transmit mail storage 31 when connection status is confirmed by sending the confirmation mail to the manager 50 or its own receive mail storage 32. In other words, it is displayed on the display section 27 when connection parameter entered in the transmit set/input window 310 shown in Fig. 3 has been determined to be invalid. The END button 512 and HELP button 514 are displayed on the confirmation screen 510. It is preferred that the cause for the invalidity of the connection parameter be indicated.

On the confirmation screen 510 shown in Fig. 5(a), a message "Input parameter error: Incorrect parameter. Check the parameter." is given as an example. Other messages include "Input parameter error: No parameter. Enter the parameter", "Connection error: Check the IP address of the transmit mail server." and "Transmit error: Transmission was rejected by the transmit mail server."

The confirmation screen 520 shown in Fig. 5(b) is an NG screen for the cases where confirmation has been made to determine whether or not the image forming apparatus 20 can access its own receive mail storage 32, independently of the confirmation electronic mail. The cause for the invalidity of the connection parameter entered in the receive set/input window 320 shown in Fig. 3 is indicated on the display section 27. The END button 512 and HELP button 514 are displayed on the confirmation screen 520. It is preferred that the cause for the invalidity of the connection parameter be indicated.

For example, "Connection error: Check the IP address of the receive mail server." appears on the confirmation screen 520 shown in Fig. 5(b). In addition, the following messages showing the causes for an error are also displayed:
"Receive mailbox authentication error: Check the mailbox name.", "Receive mailbox authentication error: Check the password.", "Receive mailbox authentication error: Check the mailbox name and password.", and "Receive error: Reception has been rejected by the receive mail server".

Further, the confirmation screen 530 shown in Fig. 5(c) is an NG screen for the cases wherein, when connection is confirmed by sending the confirmation mail to its own receive mail storage 32, and receiving this confirmation electronic mail, the confirmation mail has failed to be received by its own receive mail storage despite correct transmission operation. Namely, this screen appears on the display section 27 when the connection parameter entered in the transmit set/input window 310 shown in Fig. 3 has been evaluated as valid and the connection parameter entered in the receive set/input window 320 has been evaluated as invalid. The END button 512 and HELP button 514 are displayed on the confirmation screen 510. It is preferred that the cause for the invalidity of the connection parameter be indicated.

For example, "Connection error: Check the IP address of the receive mail server." appears on the confirmation screen 530 shown in Fig. 5(c). In addition, the following messages showing the causes for an error are also displayed: "Receive mailbox authentication error: Check the mailbox name.", "Receive mailbox authentication error: Check the password.", "Receive mailbox authentication error: Check the mailbox name and password.", and "Receive error: Reception has been rejected by the receive mail server".

As described above, confirmation screens 510, 520 and 530 are displayed on the display section 27, and the setting person checks the cause for error and clicks the END button 512. This procedure terminates the work of registering the image forming apparatus 20 for use in the network as it is not registered. If there is any unclear points or questions, the setting person clicks the HELP button 514.

It is preferred that a display step is provided for prompting reentry of the connection parameter of the operating section 25 as required, when it has been determined in the aforementioned parameter determining step (Step S120) that the connection parameter is invalid.

To put it more specifically, it is preferred that the confirmation screens 610, 620 and 630 shown in Figs. 6(a) to (c) be displayed on the display section 27.

These confirmation screens 610, 620 and 630 are the same as the confirmation screens 510, 520 and 530 shown in Figs. 5(a) to (c), plus reentry buttons 614 added thereto.

When the setting person has determined to perform reentry of a connection parameter, the setting person is allowed to click the reentry button 614 on the aforementioned confirmation screens 610, 620 and 630. To suspend the registration of the image forming apparatus for use in the network, the setting person is allowed to click the END button 512. If there is any unclear points or questions, the setting person clicks the HELP button 514.

When the Reentry button 614 has been clicked on the aforementioned confirmation screens 610, 620 and 630, the confirmation screen 710 for prompting the setting person to reenter the connection parameter with the message of "Do you want to reenter?" as shown in Fig. 7 is displayed on the display section 27.

An OK button 712, Return button 714 and HELP button 716 are indicated on the confirmation screen 710.

When the setting person has determined to reenter the connection parameter, the setting person is allowed to click the OK button 712 of the confirmation screen 710. When the OK button 712 is clicked, the system returns to the data input screen 300 and allows the setting person to reenter the connection parameter. If there is any unclear points or questions, the setting person clicks the HELP button 716.

As will be described later, when the setting person has reentered the data, the image forming apparatus 20 is rebooted as required and the system proceeds to the Parameter determining step (Step S120) again.

When the setting person has determined not to reenter the data on the confirmation screen 710, the setting person is allowed to click the Return button 714, and the confirmation screens 610, 620 and 630 shown in Fig. 6(a) to (c) are displayed on the display section 27. When the setting person clicks the END button 512 on this confirmation screen, the work of registering the image forming apparatus for use in the network is terminated without the image forming apparatus being registered.

This embodiment has been explained using an example wherein a predetermined confirmation screen is displayed on the display section 27 and buttons displayed on these confirmation screens are clicked. It is also possible that an image is formed by the image output section 23 based on the image data on the confirmation screen, and the medium with the image printed thereon is output. Then this medium is confirmed by the setting person, and the specified operation is performed from the operating section 25. This applies also to the embodiments to be described below.

Further, this embodiment has been explained using an example wherein, to confirm the transmit and receive statuses at the same time, the confirmation mail is sent to its own receive mail storage 32, and reception of this confirmation mail is confirmed. Without being restricted to this method, it is also possible to use the method where, after the confirmation mail has been sent to the manager 50, the predetermined mail is returned subsequent to reception of this mail by the manager 50, and evaluation is made to determine if this electronic mail has been received or not. This applies also to the embodiments to be described later.

### Second Embodiment

The second embodiment of the method of registering the image forming apparatus for use in a network is a preferred embodiment of the parameter determining step (Step S120) in the aforementioned embodiment.

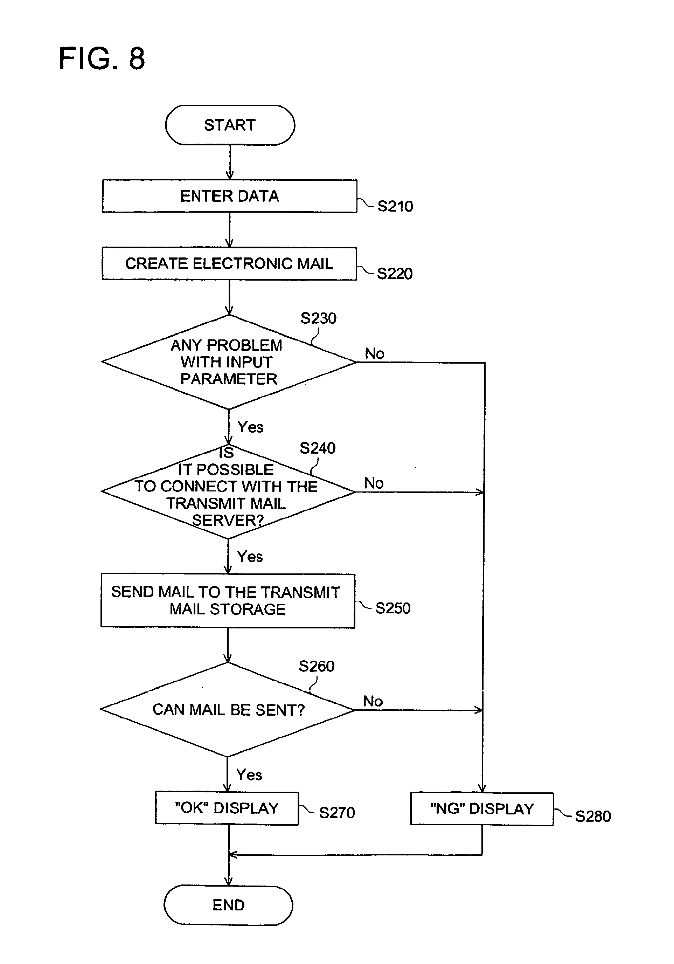

As shown in Fig. 8, the second embodiment of the present invention comprises: an electronic mail creation step (S220) for creating confirmation mail according to the setting and entry in the input step and for sending the confirmation mail to the transceiver section 21; transmit steps (Steps S230 to 250) for transmitting the aforementioned confirmation mail to the transceiver section 21 using the connection parameter for the connection between the transceiver section 21 and receive mail storage 32; and a reject confirmation determining step (Step S260) for determining whether or not the confirmation mail sent in the aforementioned transmit step is rejected by the transceiver section, and for determining that the confirmation screen is invalid if it has been confirmed that the confirmation mail has been rejected.

In the Step S210 as shown in Fig. 8, the setting person 25 is allowed to use the operating section 25 to enter the connection parameter data, similarly to the case of the aforementioned Step S110.

To put it more specifically, on the data input screen 300 given in Fig. 3, the setting person is allowed to enter the connection parameter, similarly to the case of the Step S110, and to click the confirmation test start button 340. Then the system proceeds to the Step S220.

In Step S220, confirmation mail is created by the data processing section (CPU) 22 using the connection parameter entered in the Step S210, and the system proceeds to Step S230.

In Step S230, the entered connection parameter is checked by the data processing section (CPU) 22. To put it more specifically, a syntax check is made to determine if the connection parameter has been entered or not, and if a symbol not used in the connection parameter is used or not. The expression "have a syntax error" used in the following description refers to the topsy-turvy cases where a parameter itself is not entered, a dot is not entered when entering an IP address, or four symbol groups separated by dots are not found in a complete form.

If the result of the above check is YES, namely, if the entered connection parameter has no syntax error, then the system proceeds to Step S240. If the result of the check is NO, namely, if the connection parameter has a syntax error, then the system proceeds to Step S280.

In Step S240, evaluation is made to determine whether or not the transceiver section 21 can be connected to the transmit mail storage 31, using the parameter for the connection between the transceiver section 21 and transmit mail storage 31.

To put it more specifically, the IP address of the transmit mail server entered in the IP address input window 312 of the transmit mail server shown in Fig. 3 is used to check whether or not the transceiver section 21 can be connected to the transmit mail storage 31.

If the result of the above check is YES, namely, if the transceiver section 21 can be connected with the transmit mail storage 31, then system proceeds to Step S250. If the result of the above check is NO, namely, if the transceiver section 21 cannot be connected with the transmit mail storage 31, then system proceeds to Step S280.

In Step S250, the transceiver section 21 transmits confirmation mail to the transmit mail storage 31 and the system goes to Step S260.

In the Step S260, evaluation is made to determine if the transmit mail storage 31 can send the confirmation mail to a predetermined party or not. In other words, evaluation is made to determine whether or not the confirmation mail is returned to the transceiver section 21 without being sent to the transmit mail storage 31 when the confirmation mail is sent from the transceiver section 21 to the transmit mail storage 31. If the confirmation mail has been returned to the transceiver section 21, it is determined that transmission has failed or the parameter for this connection is invalid. Here "a predetermined party" refers to the image forming apparatus 20 or manager 50.

In Step S260, if the result of evaluation is YES, namely if the confirmation mail has been sent, then the system goes to Step S270. If it is NO, namely if the confirmation mail has been returned to the transceiver section 21, then the system goes to Step S280. In the Step S270, the confirmation screen 410 indicating "OK" as shown in Fig. 4(a) is displayed on the display section 27.

In Step S280, the confirmation screen 510 indicating "NG" as shown in Fig. 5(a) is displayed on the display section 27.

On the confirmation screen 510 to be displayed when the result of evaluation in Step S230 is "NO", causes for evaluated invalid connection parameter are indicated. These causes include "Input parameter error: Incorrect parameter. Check the parameter." and "Input parameter error: No parameter entry. Enter the parameter".

On the confirmation screen 510 to be displayed when the result of evaluation in Step S240 is "NO", causes for evaluated invalid connection parameter are indicated. These causes include "Connection error: Check the IP address of the transmit mail server".

On the confirmation screen 510 to be displayed when the result of evaluation in Step S260 is "NO", causes for evaluated invalid connection parameter are indicated. These causes include "Transmit error: Transmission has been rejected by the transmit mail server".

### Third Embodiment

The third embodiment of the method of registering the image forming apparatus for use in a network is a preferred embodiment of the parameter determining step (Step S120) in the aforementioned first embodiment.

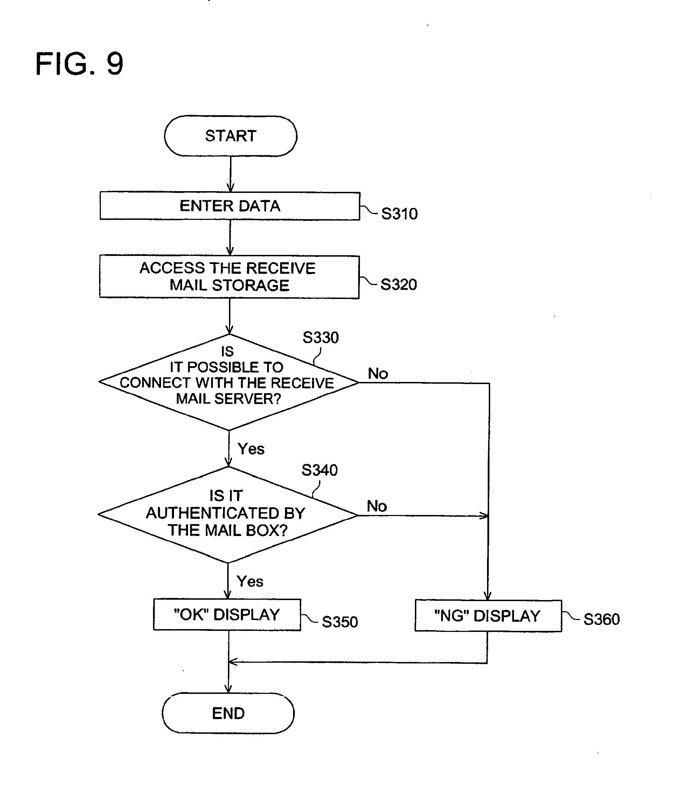

As shown in Fig. 9, the third embodiment of the present invention comprises: an access step (Step S320) for allowing the transceiver section 21 to access the receive mail storage 32, using the parameter for connection between the transceiver section 21 and receive mail storage 32, this connection parameter having been set and entered in the input step (Step S310); and an access confirmation determining steps (Steps S330 and 340) for determining whether or not the access in the aforementioned access step succeeded, and for determining that the parameter for the connection is invalid if it has been confirmed that the access failed.

As shown in Fig. 9, in Step S310, the setting person is allowed to use the operating section 25 to enter the connection parameter, similarly to the case of the above Step S110.

To put it more specifically, in the data input screen 300 shown in Fig. 3, the setting person is allowed to enter the connection parameter similarly to the case of the aforementioned Step S110, and to click the confirmation test start button 340. Then the system proceeds to Step S320.

In Step S320, the transceiver section 21 is allowed to access the receive mail storage 32 by the data processing section (CPU) 22 according to the aforementioned connection parameter, and the system proceeds to the Step S330.

In Step S330, evaluation is made to determine if the transceiver section 21 can be connected to the receive mail storage 32, according to the parameter for connection between the transceiver section 21 and receive mail storage 32, wherein this parameter is entered in Step S310.

To put it more specifically, evaluation is made to determine whether or not there is any receive mail server corresponding to the IP address entered into the IP address input window 322 of the receive mail server, namely, whether or not the transceiver section 21 can be connected to the receive mail storage 32 assigned in advance, based on the IP address.

When the result of evaluation is YES, namely when it can be connected to a predetermined receive storage, the system proceeds to Step S340. If the result of evaluation is NO, namely if it cannot be connected, the system goes to Step S360.

In Step 340, evaluation is made to determine if the transceiver section 21 is authenticated or not by the receive mail storage 32, according to the parameter for connection between the transceiver section 21 and receive mail storage 32, wherein this parameter is entered in Step S310.

To put it more specifically, evaluation is made to determine whether or not the transceiver section 21 is authenticated by the receive mail storage 32 according to the mailbox name and password entered into the mailbox name input window 324 and password input window 326 shown in Fig. 3.

When the result of evaluation is YES, namely when the transceiver section 21 has been authenticated by the receive mail storage 32, the system goes to Step S350. If the result of evaluation is NO, namely if it is not authenticated, the system goes to Step S360.

In the Step S350, the confirmation screen 420 indicating "OK" as given in Fig. 4(b) is displayed on the display section 27.

In Step S360, the confirmation screen 520 indicating "NG" as given in Fig. 5(b) is displayed on the display section 27.

On the confirmation screen 520 displayed when the result of evaluation in Step S330 is "NO", causes for the evaluated invalid connection parameter are indicated. These causes include "Connection error: Check the IP address of the receive mail server".

On the confirmation screen 520 displayed when the result of evaluation in Step S340 is "NO", causes for the evaluated invalid connection parameter are indicated. These causes include "Receive mailbox authentication error: Check the mailbox name.", "Receive mailbox authentication error: Check the password" and "Receive mailbox authentication error: Check the mailbox name and password".

### Fourth Embodiment

The fourth embodiment of the method of registering the image forming apparatus for use in a network is a preferred embodiment of the parameter determining step (Step S120) in the aforementioned first embodiment.

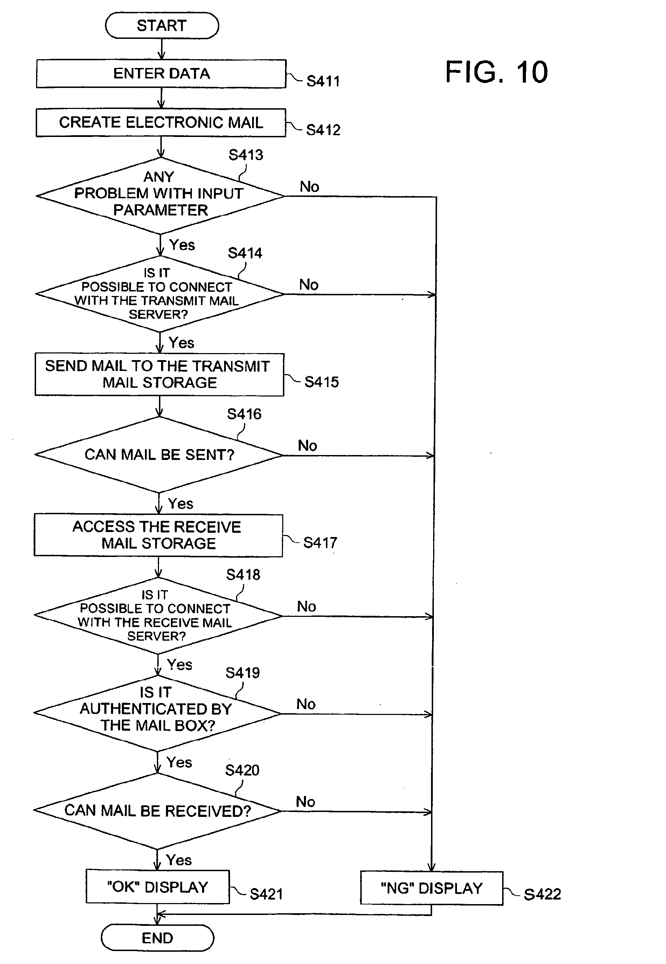

As shown in Fig. 10, the fourth embodiment of the present invention comprises: an electronic mail creation step (Step S412) for creating according to the setting and entry in the input step (Step S411) the confirmation mail to be sent to the receive mail storage 32 specified by the connection parameter set and entered in the aforementioned input step, and for sending the confirmation mail to the transceiver section 21; transmit steps (Steps S413 to 415) for allowing the transceiver section to send the aforementioned confirmation electronic mail, using the parameter of connection between the aforementioned transceiver section and transmit mail storage, this parameter having been set and entered in the aforementioned input step; a reject confirmation determining step (Step S416) for determining whether or not the confirmation mail sent in the aforementioned transmit step is rejected by the transceiver section, and for determining that the confirmation screen is invalid if it has been confirmed that the confirmation mail has been rejected; an access step (Step S417) for allowing the transceiver section to access the receive mail storage, using the parameter for connection between the transceiver section and receive mail storage, this connection parameter having been set and entered in the input step; an access confirmation determining steps (Steps S418 and 419) for determining whether or not the access in the aforementioned access step succeeded, and for determining that the parameter for the connection is invalid if it has been confirmed that the access failed; and a receive confirmation determining step (Step 420) for determining whether or not confirmation mail has been received by the receive mail storage, and for determining that confirmation mail has not been sent and received correctly if confirmation of reception cannot be made.

As shown in Fig. 10, in Step S411, the setting person is allowed to use the operating section 25 to enter the connection parameter, similarly to the case of the Step S110.

To put it more specifically, on the data input screen 300 shown in Fig. 3 the setting person is allowed to enter the connection parameter, similarly to Step S110, and to click the confirmation test start button 340. Then the system proceeds to Step S412.

In Step S412, confirmation mail is created by the data processing section (CPU) 22 using the connection parameter entered in Step S411, and the system goes to Step S413.

In Step S413, the entered connection parameter is subjected to syntax check by the data processing section (CPU) 22.

If the result of this check is YES, namely if no syntax error has been found in the connection parameter, the system goes to Step S414. If the result of this check is NO, namely if a syntax error has been found in the connection parameter, the system goes to Step S422.

In Step S414, evaluation is made to determine if the transceiver section 21 can be connected to the transmit mail storage 31, according to the parameter for connection between the transceiver section 21 and transmit mail storage 31.

To put it more specifically, evaluation is made to determine whether or not the transceiver section 21 can be connected to the transmit mail storage 31 according to the IP address of the transmit mail server entered in the IP address input window 312 of the transmit mail server shown in Fig. 3.

If the result of this check is YES, namely if the transceiver section 21 can be connected to the transmit mail storage 31, the system proceeds to the Step S415. If the result of this check is NO, namely if it cannot be connected, the system proceeds to the Step S422.

In Step S415, the transceiver section 21 sends confirmation mail to the transmit mail storage 31, and the system proceeds to the Step S416.

In Step S416, evaluation is made to determine whether or not the transmit mail storage 31 can send confirmation electronic mail. In other words, when confirmation mail is sent from the transceiver section 21 to the transmit mail storage 31, evaluation is made to determine whether or not the confirmation mail has been returned to the transceiver section 21 without being sent to the transmit mail storage 31. If it has been returned to the transceiver section 21, it is determined that the mail cannot be sent, namely the parameter related to this connection is invalid.

If the result of this check is YES in Step S416, namely if confirmation mail has been sent, the system proceeds to the Step S417. If the result of this check is NO, namely if the confirmation mail ahs been returned to the transceiver section 21, the system proceeds to the Step S422.

In Step S417, the transceiver section 21 is allowed to access the receive mail storage 32 according to the aforementioned parameter, and the system proceeds to the Step S418.

In Step S418, evaluation is made to determine whether or not the transceiver section 21 can be connected to the receive mail storage 32, according to the parameter for connection between the transceiver section 21 and receive mail storage 32, this parameter having been entered in Step S411.

To put it more specifically, evaluation is made to determine whether or not there is the receive mail server corresponding to the IP address entered in the IP address input window 322 of the receive mail server shown in Fig. 3, namely whether or not the transceiver section 21 can be connected to the pre-assigned receive mail storage 32 according to the IP address.

If the result of this check is YES, namely if transceiver section 21 can be connected to a predetermined receive mail storage, the system proceeds to the Step S419. If the result of this check is NO, namely if it cannot be connected, the system proceeds to the Step S422.

In Step S419, evaluation is made to determine whether or not the transceiver section 21 has been authenticated by the receive mail storage 32, according to the parameter for connection between the transceiver section 21 and receive mail storage 32, this parameter having been entered in Step S411.

To put it more specifically, evaluation is made to determine whether or not the transceiver section 21 has been authenticated by the receive mail storage 32, according to the mailbox name and password entered in the mail box name input window 324 and password input window 326 shown in Fig. 3.

If the result of this check is YES, namely if the transceiver section 21 has been authenticated by the receive mail storage 32, the system proceeds to the Step S420. If the result of this check is NO, namely if it is not authenticated, the system proceeds to the Step S422.

In Step S420, evaluation is made to determine whether or not the confirmation mail sent from the image forming apparatus 20 to its own equipment has been received by the receive mail storage 32.

If the result of this check is YES, namely if the aforementioned confirmation mail has been received by the receive mail storage 32, the system proceeds to the Step S421. If the result of this check is NO, namely if it has not been received, the system proceeds to the Step S422.

In Step S421, the confirmation screen 430 indicating "OK" as given in Fig. 4(c) is displayed on the display section 27. It is also possible to make arrangements so that the image forming apparatus 20 can receive confirmation mail from the receive mail storage 32 at the discretion of the setting person or automatically.

In Step S422, the confirmation screens 510 and 530 indicating "NG" as given in Figs. 5(a) and (c) are displayed on the display section 27.

On the confirmation screen 510 displayed when the result of the check in Step S413 is NO, causes for the evaluated invalid connection parameter are indicated. These causes include "Input parameter error: Incorrect parameter. Check the parameter", and "Input parameter error: No parameter entry. Enter the parameter".

On the confirmation screen 510 displayed when the result of the check in Step S414 is NO, causes for the evaluated invalid connection parameter are indicated. These causes include "Connection error: Check the IP address of the transmit mail server".

On the confirmation screen 510 to be displayed when the result of evaluation in Step S416 is "NO", causes for evaluated invalid connection parameter are indicated. These causes include "Transmit error: Transmission has been rejected by the transmit mail server".

On the confirmation screen 530 to be displayed when the result of evaluation in Step S418 is "NO", causes for evaluated invalid connection parameter are indicated. These causes include "Connection error: Check the IP address of the receive mail server".

On the confirmation screen 530 displayed when the result of evaluation in Step S419 is "NO", causes for the evaluated invalid connection parameter are indicated. These causes include "Receive mailbox authentication error: Check the mailbox name.", "Receive mailbox authentication error: Check the password" and "Receive mailbox authentication error: Check the mailbox name and password".

On the confirmation screen 530 to be displayed when the result of evaluation in Step S420 is "NO", causes for evaluated invalid connection parameter are indicated. These causes include "Receive error: Reception has been rejected by the receive mail server".

### Fifth Embodiment

The fifth embodiment of the method of registering the image forming apparatus for use in a network is a preferred embodiment when confirmation mail has not yet received by the receive mail storage 32, in the receive confirmation determining step (Step S420) in the aforementioned fourth embodiment.

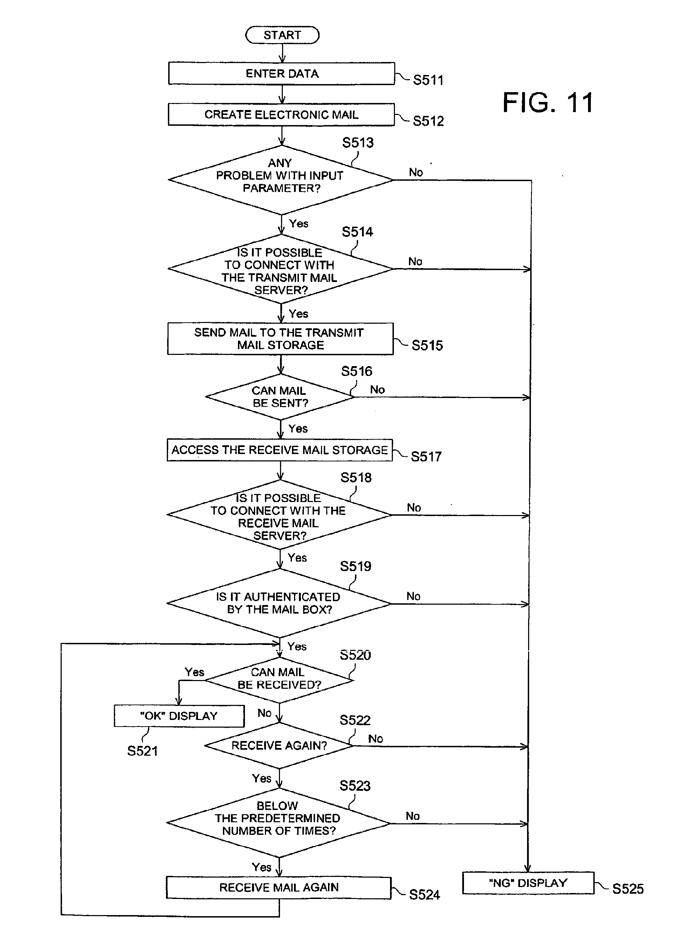

As shown in Fig. 11, the fifth embodiment of the present invention comprises: a re-receive confirmation determining step (Step S522) for determining whether or not reception should be performed again so that the aforementioned transceiver section accesses the receive mail storage again when it has been determined that the confirmation mail has not received by the receive mail storage 32; and a number-of-times determining step (Step S523) wherein evaluation is made to determine whether or not re-reception is made a predetermined number of times when it has been determined that re-reception should be performed in the aforementioned re-receive confirmation determining step, and the reception of confirmation mail has not been performed correctly when it has been determined that re-reception has already been done a predetermined number of times.

In Step S511 as shown in Fig. 11, the setting person is allowed to use the operating section 25 to enter the connection parameter, similarly to the case of the Step S110.

To put it more specifically, on the data input screen 300 given in Fig. 3, the setting person is allowed to enter the connection parameter similarly to the case of the Step S110 and to click the confirmation test start button 340.
The system proceeds to the Step S512.

In Step S512, confirmation mail is created by the system proceeds to the Step S513.

In Step S513, the connection parameter entered in the data processing section (CPU) 22 is subjected to syntax check.

If the result of this check is YES, namely if there is no syntax error, the system proceeds to the Step S514. If the result of this check is NO, namely if there is any syntax error, the system proceeds to the Step S525.

In Step S514, evaluation is made to determine whether or not the transceiver section 21 can be connected to the transmit mail storage 31, according to the parameter for connection between the transceiver section 21 and transmit mail storage 31.

To put it more specifically, evaluation is made to determine whether or not the transceiver section 21 can be connected to the transmit mail storage 31, according to the IP address of the transmit mail server entered through the IP address input window 312 of the transmit mail server show in Fig. 3.

If the result of this check is YES, namely if the transceiver section 21 can be connected to the transmit mail storage 31, the system proceeds to the Step S515. If the result of this check is NO, namely if it cannot be connected, the system proceeds to the Step S525.

In Step S515, the transceiver section 21 sends confirmation mail to the transmit mail storage 31 and the system proceeds to the Step S516.

In Step S516, evaluation is made to determine whether or not the transmit mail storage 31 can send confirmation electronic mail. In other words, evaluation is made to determine whether or not confirmation mail is returned to the transceiver section 21 without being sent to the transmit mail storage 31, when confirmation mail is sent to the transmit mail storage 31 from the transceiver section 21. If the confirmation mail has been returned to the transceiver section 21, it is determined that confirmation mail cannot be sent, namely the parameter for this connection is invalid.

In Step S516, if the result of this check is YES, namely if confirmation mail has been sent, the system proceeds to the Step S517. If the result of this check is NO, namely if confirmation mail has been returned to the transceiver section 21, the system proceeds to the Step S525.

In Step S517, the transceiver section 21 is allowed to access the receive mail storage 32 by the data processing section (CPU) 22 according to the aforementioned connection, and the system proceeds to the Step S415.

In Step S518, evaluation is made to determine whether or not the transceiver section 21 can be connected to the receive mail storage 32, according to the parameter for connection between the transceiver section 21 and receive mail storage 32 entered in Step S511.

To put it more specifically, evaluation is made to determine whether or not there is the receive mail server corresponding to the IP address entered in the IP address input window 322 of the receive mail server shown in Fig. 3, namely whether or not the transceiver section 21 can be connected to the pre-assigned receive mail storage 32 according to the IP address.

If the result of this check is YES, namely if the transceiver section 21 can be connected to a predetermined receive mail storage, the system proceeds to the Step S519. If the result of this check is NO, namely if it cannot be connected, the system proceeds to the Step S525.

In Step S519, evaluation is made to determine whether or not the transceiver section 21 can be connected to the receive mail storage 32, according to the parameter for connection between the transceiver section 21 and receive mail storage 32 entered in Step S511.

To put it more specifically, evaluation is made to determine whether or not the transceiver section 21 has been authenticated by the receive mail storage 32, according to the mailbox name and password entered in the mail box name input window 324 and password input window 326 shown in Fig. 3.

If the result of this check is YES, namely if the transceiver section 21 has been authenticated by the receive mail storage 32, the system proceeds to the Step S520. If the result of this check is NO, namely if it is not authenticated, the system proceeds to the Step S522.

In Step S520, evaluation is made to determine whether or not the confirmation mail sent from the image forming apparatus 20 to its own equipment has been received by the receive mail storage 32.

If the result of this check is YES, namely if the aforementioned confirmation mail has been received by the receive mail storage 32, the system proceeds to the Step S521. If the result of this check is NO, namely if it has not been received, the system proceeds to the Step S522.

In Step S521, the confirmation screen 430 given in Fig. 4(c) is displayed on the display section 27. It is also possible to make arrangements so that confirmation mail can be received from the receive mail storage 32 at the discretion of the setting person or directly.

In Step S522, the transceiver section 21 is allowed to access the receive mail storage 32 again, and evaluation is made to determine whether or not confirmation mail should be received again.

If the result of this check is YES, namely if confirmation mail is to be received again, the system proceeds to the Step S523. If the result of this check is NO, namely if it is not received again, the system proceeds to the Step S525.

In Step S523, evaluation is made to determine whether or not the number of times confirmation mail is received is below the predetermined number of times. The aforementioned predetermined number of times is not subjected to any restriction. It refers to any preset number of times.

In Step S523, it is also preferred that evaluation be made to determine whether or not a predetermined time has elapsed during the time from reception of confirmation mail (Step S520) to re-reception. The aforementioned time is not subjected to any restriction. It refers to any preset number of times. In Step S523, it is also preferred that re-reception of confirmation mail be evaluated by combination of "a predetermined number of times" with "a predetermined time".

If the result of this check in Step S523 is YES, namely if the number of times confirmation mail has been received is below the predetermined number of times, the system proceeds to the Step S524. confirmation mail is received again and the system returns to the Step S520.

If the result of this check is NO, namely if the number of times confirmation mail has been received is above the predetermined number of times, the system proceeds to the Step S525.

In Step S525, the confirmation screens 510 and 530 indicating "NG" as given in Figs. 5(a) and (c) are displayed on the display section 27.

On the confirmation screen 510 displayed when the result of the check in Step S513 is NO, causes for the evaluated invalid connection parameter are indicated. These causes include "Input parameter error: Incorrect parameter. Check the parameter", and "Input parameter error: No parameter entry. Enter the parameter".

On the confirmation screen 510 displayed when the result of the check in Step S514 is NO, causes for the evaluated invalid connection parameter are indicated. These causes include "Connection error: Check the IP address of the transmit mail server".

On the confirmation screen 510 to be displayed when the result of evaluation in Step S516 is "NO", causes for evaluated invalid connection parameter are indicated. These causes include "Transmit error: Transmission has been rejected by the transmit mail server".

On the confirmation screen 530 to be displayed when the result of evaluation in Step S518 is "NO", causes for evaluated invalid connection parameter are indicated. These causes include "Connection error: Check the IP address of the receive mail server".

On the confirmation screen 530 displayed when the result of evaluation in Step S519 is "NO", causes for the evaluated invalid connection parameter are indicated. These causes include "Receive mailbox authentication error: Check the mailbox name.", "Receive mailbox authentication error: Check the password" and "Receive mailbox authentication error: Check the mailbox name and password".

On the confirmation screen 530 to be displayed when the result of evaluation in Step S522 is "NO", causes for evaluated invalid connection parameter are indicated. These causes include "Receive error: Reception has been rejected by the receive mail server".

On the confirmation screen 530 to be displayed when the result of evaluation in Step S523 is "NO", causes for evaluated invalid connection parameter are indicated. These causes include "Receive error: Reception has been rejected by the receive mail server".

### Sixth Embodiment

The sixth embodiment of the method of registering the image forming apparatus for use in a network is a preferred embodiment when connection parameter has been determined to be invalid in the parameter determining step (Step S120) in the aforementioned first embodiment.

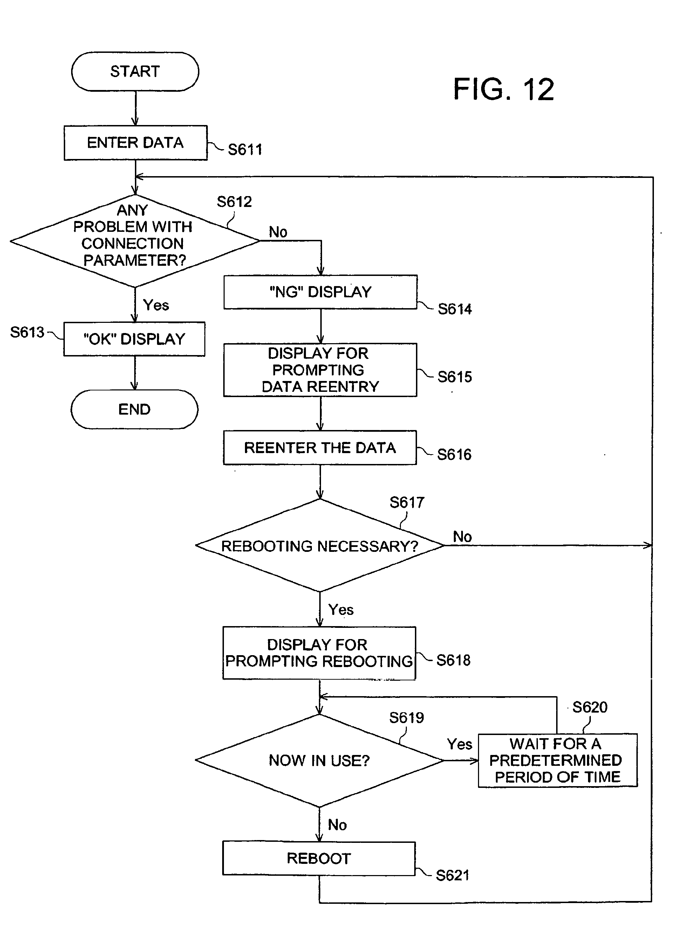

As shown in Fig. 12, the sixth embodiment of the present invention comprises: a reentry step (Step S616) for prompting reentry of a new connection parameter; a reboot confirmation step (Step S617) for determining whether or not there is any image forming apparatus that cannot be recognized by the electronic mail server, if the connection parameter entered in the reentry step does not reboot the image forming apparatus as its own equipment; and a reboot prompt display step (Step S618) for indicating that rebooting of the image forming apparatus is essential when the connection parameter having been entered in the reentry step is determined in the reboot confirmation step to be a connection parameter that requires rebooting of the image forming apparatus.

In Step S611 as shown in Fig. 12, the setting person is allowed to use the operating section 25 to enter the connection parameter, similarly to the case of the Step S110.

To put it more specifically, on the data input screen 300 given in Fig. 3, the setting person is allowed to enter the connection parameter similarly to the case of the Step S110 and to click the confirmation test start button 340.
The system proceeds to the Step S612.

In Step S612, the connection status of the transceiver section 21 and transmit mail storage 31 and/or the connection status of the transceiver section 21 and receive mail storage 32 are monitored using the connection parameter set and entered in Step S610, thereby determining if the connection parameter set and entered in the aforementioned input Step S611 is valid or not.

If the result of this check is YES, namely if the connection parameter has been determined to be valid, the system goes to step (Step S613). If the result of this check is NO, namely if the connection parameter has been determined to be invalid, the system proceeds to the NG display step (Step S614).

In Step S613, the confirmation screens 410, 420 and 430 are displayed on the display section 27, where these screens are "OK" screens to show that the state of connection in Figs. 4(a) to (c) is satisfactory (OK), similarly to the case of the Step S130. The registration of the image forming apparatus for use in the network is updated when the END button 412 displayed on these confirmation screens is clicked. Then the registration work terminates.

In Step S614, the confirmation screens 610, 620 and 630 are displayed on the display section 27, where these screens are "NG" screens to show that the state of connection in Figs. 6(a) to (c) is not satisfactory (NG), similarly to the case of the Step S140. When the reentry button 614 is clicked on these confirmation screens, the system proceeds to the Step S615 that prompts reentry of the connection parameter.

In Step S615, a confirmation screen 710 for prompting the setting person to reenter the connection parameter given in Fig. 7 is displayed on the display section 27.

When it has been determined that reentry is necessary, the OK button 712 on the confirmation screen 710 is clicked by the setting person, and the system proceeds to the Step S616.

In Step S616, the data input screen 300 given in Fig. 3 is displayed on the display section 27 again and the setting person is allowed to reenter the connection parameter requiring updating, according to the cause for a parameter error shown in Step S614.

Upon termination of the reentry of the connection parameter by the setting person, the setting person is allowed to click the OK button (not illustrated) of the data input screen 300. When the OK button has been clicked, the system proceeds to the Step S617.

In Step S617, evaluation is made to determine whether or not the image forming apparatus 20 should be rebooted in order to ensure that the reentered connection parameter permits the image forming apparatus 20 to be recognized by the electronic mail server 30.

If the result of this check is NO, namely if it has been determined that rebooting is not required, the system proceeds to the Step S612 again and the reentered connection parameter is checked again.

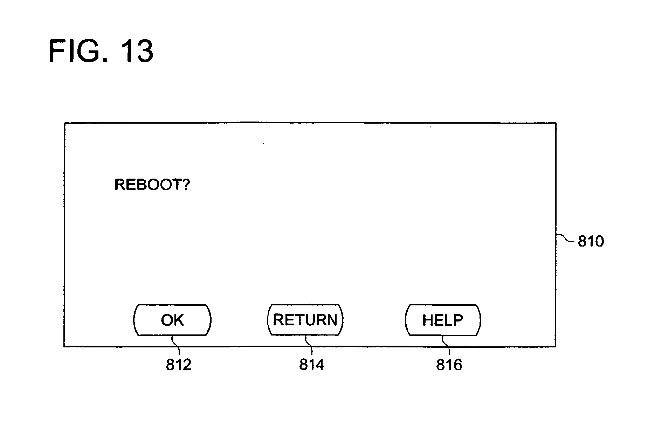

If the result of this check is YES, namely if it has been determined that rebooting is required, the system proceeds to the Step S618 and a confirmation screen 710 for prompting the setting person to reboot the image forming apparatus 20 given in Fig. 13 is displayed on the display section 27. At the same time, the setting person is allowed to determine whether or not the image forming apparatus 20 is to be rebooted.

An OK button 812, return button 814 and HELP button 816 are displayed on the confirmation screen 810.

It is also possible to arrange such a configuration that, when the setting person has determined that the image forming apparatus 20 is not rebooted, the setting person is allowed to click the return button 814 on the confirmation screen 810, and the confirmation screens 610, 620 and 630 given in Figs. 6(a) to (c) are displayed again.

When the setting person has clicked the END button 512 on these confirmation screens 610, 620 and 630, the work of registering the image forming apparatus 20 for use in the network terminates without the image forming apparatus 20 being registered. If there is any unclear points or questions, the setting person clicks the HELP button 816. When the OK button 812 is clicked, the system proceeds to the Step S619.

In Step S619, evaluation is made to determine whether or not the image forming apparatus 20 is being used or not. To put it more specifically, evaluation is made to see if the main units of the aforementioned copy machine, fax machine, scanner and a combination thereof are currently operating or not. It is also preferred to check if use of these main units is reserved or not, in addition to checking for the current status of operation. If the result of this check is YES, namely if the image forming apparatus 20 is currently working, the system proceeds to the Step S620. If the result of this check is NO, namely if the image forming apparatus 20 is not working, the system proceeds to the Step S621.

The Step S620 is a step of waiting where the image forming apparatus 20 is not rebooted for a predetermined period of time. This waiting time can be set as desired.

After the lapse of the predetermined period of time, the system again returns to the Step S619.

In Step S619, the image forming apparatus 20 is rebooted and the reentered connection parameter is determined as valid. The system again returns to Step S612 after the image forming apparatus 20 has been rebooted, and the reentered connection parameter is checked.

### Seventh Embodiment

The seventh embodiment of the method of registering the image forming apparatus for use in a network is a preferred embodiment when connection parameter entered in the aforementioned reentry step has been determined in the aforementioned reboot confirmation step (Step S617) to be a in connection parameter that requires the image forming apparatus to be rebooted.

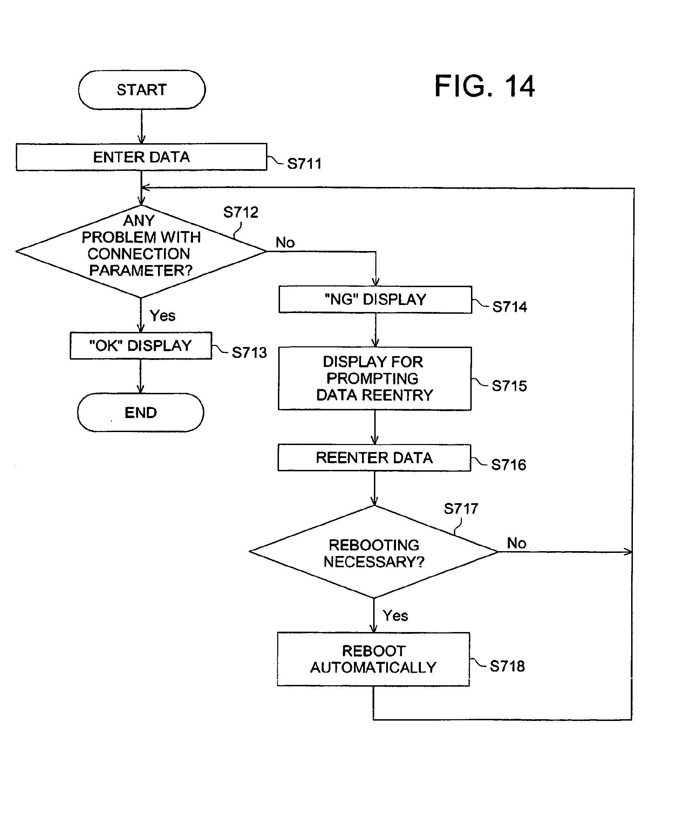

As shown in Fig. 14, the seventh embodiment of the present invention is preferred to further include a reboot step (Step S718) for automatic rebooting of the image forming apparatus.

In Fig. 14, in Step S711 the setting person is allowed to use the operating section 25 to enter the connection parameter, similarly to the case of Step S110.

To put it more specifically, the setting person is allowed to enter the connection parameter on the data input screen 300 given in Fig. 3, similarly to the case of the Step S110, and to click the confirmation test start button 340. Then the system proceeds to the Step S712.

In Step S712, the connection status of the transceiver section 21 and transmit mail storage 31 and/or the connection status of the transceiver section 21 and receive mail storage 32 are monitored using the connection parameter set and entered in Step S711, thereby determining if the connection parameter set and entered in the aforementioned input Step S711 is valid or not.

If the result of this check is YES, namely if the connection parameter is determined to be valid, the system proceeds to the OK display step (Step S713). If the result of this check is NO, namely if it is determined to be invalid, the system proceeds to the NG displays step (Step S714).

In Step S713, the confirmation screens 410, 420 and 430 are displayed, where these screens are "OK" screens to show that the state of connection in Figs. 4(a) to (c) is satisfactory (OK), similarly to the case of the Step S130. The registration of the image forming apparatus for use in the network is updated when the END button 412 displayed on these confirmation screens is clicked. Then the registration work terminates.

In Step S714, the confirmation screens 610, 620 and 630 are displayed on the display section 27, where these screens are "NG" screens to show that the state of connection in Figs. 6(a) to (c) is not satisfactory (OK), similarly to the case of the Step S140.

When the reentry button 614 is clicked on these confirmation screens, the system proceeds to the Step S715 that prompts reentry of the connection parameter.

In Step S715, a confirmation screen 710 for prompting the setting person to reenter the connection parameter given in Fig. 7 is displayed on the display section 27.

When it has been determined that reentry is necessary, the OK button 712 on the confirmation screen 710 is clicked by the setting person, and the system proceeds to the Step S716.

In Step S716, the data input screen 300 given in Fig. 3 is displayed on the display section 27 again and the setting person is allowed to reenter the connection parameter requiring updating, according to the cause for a parameter error shown in Step S714.

Upon termination of the reentry of the connection parameter by the setting person, the setting person is allowed to click the OK button (not illustrated) of the data input screen 300. When the OK button has been clicked, the system proceeds to the Step S717.

In Step S717, evaluation is made to determine whether or not the image forming apparatus 20 should be rebooted in order to ensure that the reentered connection parameter permits the image forming apparatus 20 to be recognized by the electronic mail server 30.

If the result of this check is NO, namely if it has been determined that rebooting is not necessary, the system goes to Step S712 again, and the reentered connection parameter is again checked.

If the result of this check is YES, namely if it has been determined that rebooting of the image forming apparatus 20 is essential, then system proceeds to the Step S718.

In the Step S718, the image forming apparatus 20 is automatically rebooted and the reentered connection parameter is determined to be valid. After rebooting of the image forming apparatus 20, the system returns to the Step S721 and the reentered connection parameter is again checked.

To put it more specifically, in the seventh embodiment the operations in Step S712 include those in the following eighth to eleventh embodiments. They will be described below with reference to drawings.

### Eighth Embodiment

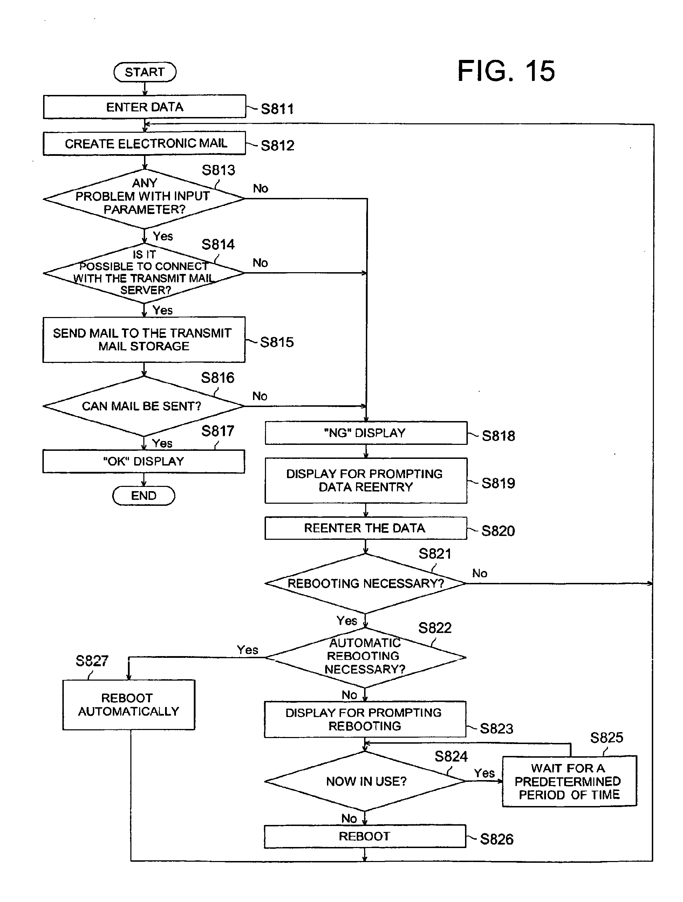

As shown in Fig. 15, the eighth embodiment of the present invention comprises: an input step (Step S811) for prompting setting and entry of a predetermined connection parameter for connection of the transceiver section 21 to the electronic mail server 30; an electronic mail creation step (Step S812) for creating confirmation mail according to the setting and entry in the input step and transmitting the confirmation mail to the transceiver section 21; transmit steps (Steps S813 to 815) for allowing the transceiver section 21 to transmit the confirmation mail using the parameter for connection between the transceiver section 21 and transmit mail storage 31, the parameter having been set and entered in the input stage; a reject confirmation determining step (Step S816) for determining whether or not the confirmation mail sent in the aforementioned transmit step is rejected by the transceiver section 21, and for determining that the confirmation screen is invalid if it has been confirmed that the confirmation mail has been rejected; display steps (Steps S817 and 818) for displaying the result of the aforementioned parameter check; a re-input step (Step S820) for prompting reentry of a new connection parameter in updating the connection parameter once set and input, when it has been determined that the connection parameter is invalid as a result of checking the parameter; a reboot confirmation step (Step S821) for determining whether or not the image forming apparatus can be recognized by the electronic mail server 30 only when the image forming apparatus as its own equipment is rebooted by the connection parameter entered in the re-input step; a reboot prompt display step (Step S823) for indicating that rebooting of the image forming apparatus 20 is necessary when it has been determined in the reboot confirmation step that the connection parameter entered in the re-input step is a connection parameter necessary to reboot the image forming apparatus 20; and a reboot step (Step S827) for automatically rebooting the image forming apparatus 20.

In Step S811 as shown in Fig. 15, the setting person is allowed to use the operating section 25 to enter the connection parameter, similarly to the case of Step S110.

To put it more specifically, in the data input screen 300 as given in Fig. 3, the setting person is allowed to enter the connection parameter similarly to the case of Step S110 and to click the confirmation test start button 340, and the system proceeds to the Step S812.

In Step S812, confirmation mail is created by the data processing section (CPU) 22 using the connection parameter entered in Step S811, and the system proceeds to the Step S813.

In Step S813, the entered connection parameter is checked by the data processing section (CPU) 22.

If the result of this check is YES, namely if the entered connection parameter has no syntax error, the system proceeds to the Step S814. If the result of this check is NO, namely if there is any problem, the system proceeds to the Step S818.

In Step S814, evaluation is made to determine whether or not the transceiver section 21 can be connected by the transmit mail storage 31 by the connection parameter.

To put it more specifically, evaluation is made to determine whether or not the transceiver section 21 can be connected to the transmit mail storage 31 by the IP address of the transmit mail server entered into the IP address input window 312 of the transmit mail server shown in Fig. 3.

If the result of this check is YES, namely if the transceiver section 21 can be connected to the transmit mail storage 31, the system proceeds to the Step S815. If the result of this check is NO, namely if it cannot be connected, the system proceeds to the Step S818.

In Step S815, the transceiver section 21 transmits confirmation mail to the transmit mail storage 31 and the system proceeds to the Step S816.

In Step S816, evaluation is made to determine whether or not if the transmit mail storage 31 can transmit confirmation mail to a predetermined party. In other words, when confirmation mail is sent from the transceiver section 21 to the transmit mail storage 31 evaluation is made to determine whether or not the confirmation mail is returned to the transceiver section 21 without being sent to the transmit mail storage 31. If the confirmation mail is returned to the transceiver section 21, it has been determined that it cannot be transmitted, namely it the parameter for the connection is not valid. The predetermined party refers to the image forming apparatus 20 or manager 50.

In Step S816, if the result of this check is YES, namely if the confirmation mail has been sent, the system proceeds to the Step S817. If the result of this check is NO, namely if the confirmation mail is returned to the transceiver section 21, the system proceeds to the Step S818.

In Step S817, the confirmation screen 410 for indicating "OK" as shown in Fig. 4(a) is indicated on the display section 27.

In Step S818, the confirmation screen 610 for indicating "NG" as shown in Fig. 6(a) is displayed on the display section 27.

On the confirmation screen 610 displayed when the result of this check in Step S813 is NO, causes for evaluated invalid connection parameter are indicated. These causes include "Input parameter error: Incorrect parameter. Check the parameter", and "Input parameter error: No parameter entry. Enter the parameter".

On the confirmation screen 610 displayed when the result of this check in Step S814 is NO, causes for evaluated invalid connection parameter are indicated. These causes include "Connection error: Check the IP address of the receive mail server".

On the confirmation screen 610 displayed when the result of evaluation in Step S816 is "NO", causes for the evaluated invalid connection parameter are indicated. These causes include "Transmit error: Transmission has been rejected by the transmit mail server".

When the reentry button 614 has been clicked on the confirmation screen 610, the system proceeds to the Step S819 for prompting the reentry of a connection parameter.

In Step S819, the confirmation screen 710 for prompting the setting person to reenter the connection parameter is displayed on the display section 27.

When the setting person has determined to reenter the data, he/she is allowed to clock the OK button 712 of the confirmation screen 710 and the system proceeds to the Step S820.

In Step S820, the data input screen 300 shown in Fig. 3 is again displayed in the display section 27, and the setting person is allowed to reenter the connection parameter to be updated according to the cause for the connection parameter error shown in Step S818.

Upon termination of the reentry of the connection parameter by the setting person, the setting person is allowed to click the OK button (not illustrated) of the data input screen 300. When the OK button has been clicked, the system proceeds to the Step S821.

In Step S821, evaluation is made to determine whether or not the image forming apparatus 20 should be rebooted in order to ensure that the reentered connection parameter permits the image forming apparatus 20 to be recognized by the electronic mail server 30.

If the result of this check is NO, namely if it has been determined that rebooting is not necessary, the system again proceeds to the Step S812. Confirmation mail is created by the data processing section (CPU) 22 using the connection parameter entered again.

If the result of this check is YES, namely if it has been determined that rebooting is necessary, the system proceeds to the Step S822.

In Step S822 evaluation is made to determine whether or not rebooting of the image forming apparatus 20 should be performed automatically.

If the result of this check is YES, namely if it has been determined that rebooting of the image forming apparatus 20 should be performed automatically, the system proceeds to the Step S827.

In Step S827, the image forming apparatus 20 is automatically rebooted and the reentered connection parameter is determined to be valid. After the image forming apparatus 20 has been rebooted, the system returns to Step S812, and confirmation mail is created by the data processing section (CPU) 22 using the reentered connection parameter.

If the result of this check in Step S822 is NO, namely if it has been determined that automatic rebooting of the image forming apparatus 20 is not required, the system proceeds to the Step S823. The confirmation screen 810 for prompting the setting person to reboot the image forming apparatus 20 is displayed on the display section 27 and the setting person is allowed to determine if the image forming apparatus 20 should be rebooted or not.

When the setting person has determined not to reboot the image forming apparatus 20, it is also possible to arrange such a configuration that the setting person is allowed to click the Return bottom 814 on the confirmation screen 810 so that the confirmation screen 610 of the Fig. 6(a) is displayed on the display section 27 again.

Further, when the setting person has clicked the END button 512 on the confirmation screen 610, the work of registering the image forming apparatus 20 for use in the network terminates without the image forming apparatus 20 being registered. If the OK button 812 has been clicked, the system proceeds to the Step S824.

In Step S824, evaluation is made to determine whether or not the image forming apparatus 20 is being used or not. To put it more specifically, evaluation is made to see if the main units of the aforementioned copy machine, fax machine, scanner and a combination thereof are currently operating or not. It is also preferred to check if use of these main units is reserved or not, in addition to checking for the current status of operation. If the result of this check is YES, namely if the image forming apparatus 20 is currently working, the system proceeds to the Step S825. If the result of this check is NO, namely if the image forming apparatus 20 is not working, the system proceeds to the Step S826.

In Step S825, the image forming apparatus 20 is made to wait without being rebooted for a predetermined period of time. This waiting time can be set as desired.

After the lapse of the predetermined period of time, the system again returns to the Step S824.

In Step S826, the image forming apparatus 20 is rebooted and the reentered connection parameter is determined as valid. The system again returns to Step S812 after the image forming apparatus 20 has been rebooted, and confirmation mail is created by the data processing section (CPU) 22 using the reentered connection parameter.

### Ninth Embodiment

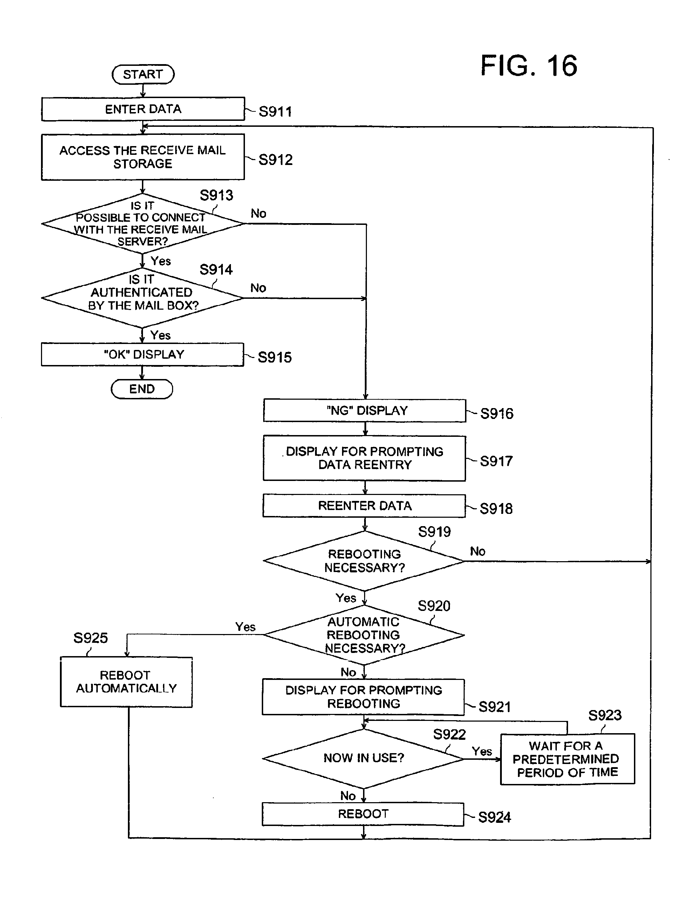

As shown in Fig. 16, the ninth embodiment of the method of registering the image forming apparatus for use in a network according to the present invention comprises: an input step (Step S911) for prompting a predetermined connection parameter to be set and entered to connect the transceiver section 21 to both the transmit mail storage 31 and receive mail storage 32 of the electronic mail server 30; an access step (Step S912) for allowing the transceiver section 21 to access the receive mail storage 32; access confirmation determining steps (Steps S913 and 914) for checking whether or not the access in the aforementioned access step has succeed, and for determining that the parameter for this connection is invalid if it is determined that access has failed; a display step (Step S917) for displaying the result of check in the aforementioned parameter determining step and for displaying on the operating section 25 a message prompting reentry of the connection parameter; a re-input step (Step S918) for prompting reentry of a new connection parameter in updating the connection parameter once set and input, when it has been determined that the connection parameter is invalid as a result of checking the parameter; a reboot confirmation step (Step S919) for determining whether or not the image forming apparatus 20 can be recognized by the electronic mail server 30 only when the image forming apparatus 20 as its own equipment is rebooted by the connection parameter entered in the re-input step; a reboot prompt display step (Step S921) for indicating that rebooting of the image forming apparatus 20 is necessary when it has been determined in the reboot confirmation step that the connection parameter entered in the re-input step is a connection parameter necessary to reboot the image forming apparatus 20; and a reboot step (Step S925) for automatically rebooting the image forming apparatus 20.

In Step S911 as shown in Fig. 16, the setting person is allowed to use the operating section 25 to enter the connection parameter, similarly to the case of Step S110.

To put it more specifically, on the data input screen 300 as given in Fig. 3, the setting person is allowed to enter the connection parameter similarly to the case of Step S110 and to click the confirmation test start button 340, and the system proceeds to the Step S912.

In Step S912, the transceiver section 21 is accessed the transmit mail storage 31 by the data processing section (CPU) 22 according to the connection parameter, and the system proceeds to Step S913.

In Step S913, evaluation is made to determine whether or not the transceiver section 21 can be connected to the receive mail storage 32, using the parameter for connection between the transceiver section 21 and receive mail storage 32.

To put it more specifically, evaluation is made to determine whether or not there is the receive mail server corresponding to the IP address entered in the IP address input window 322 of the receive mail server shown in Fig. 3, namely whether or not the transceiver section 21 can be connected to the pre-assigned receive mail storage 32 according to the IP address.

If the result of this check is YES, namely if the transceiver section 21 can be connected to a predetermined receive mail storage, the system proceeds to the Step S914. If the result of this check is NO, namely if it cannot be connected, the system proceeds to the Step S916.

In Step S914, evaluation is made to determine whether or not the transceiver section 21 is authenticated by the receive mail storage 32 according to the parameter for connection between the transceiver section 21 and receive mail storage 32.

To put it more specifically, evaluation is made to determine whether or not the transceiver section 21 has been authenticated by the receive mail storage 32, according to the mailbox name and password entered in the mail box name input window 324 and password input window 326 shown in Fig. 3.

If the result of this check is YES, namely if the transceiver section 21 has been authenticated by the receive mail storage 32, the system proceeds to the Step S915. If the result of this check is NO, namely if it is not authenticated, the system proceeds to the Step S916.

In Step S915, the confirmation screen 420 indicating "OK" in Fig. 4(b) is displayed on the display section 27.

In Step S916, the confirmation screen 620 indicating "NG" in Fig. 6(b) is displayed on the display section 27.

On the confirmation screen 620 to be displayed when the result of evaluation in Step S913 is "NO", causes for evaluated invalid connection parameter are indicated. These causes include "Connection error: Check the IP address of the receive mail server".

On the confirmation screen 620 to be displayed when the result of evaluation in Step S914 is "NO", causes for evaluated invalid connection parameter are indicated. These causes include "Receive mailbox authentication error: Check the mailbox name.", "Receive mailbox authentication error:
Check the password" and "Receive mailbox authentication error: Check the mailbox name and password".

When the reentry button 614 is clicked on the confirmation screen 620, the system proceeds to the Step S917 that prompts reentry of the connection parameter.

In Step S917, a confirmation screen 710 for prompting the setting person to reenter the connection parameter given in Fig. 7 is displayed on the display section 27.

When it has been determined that reentry is necessary, the OK button 712 on the confirmation screen 710 is clicked by the setting person, and the system proceeds to the Step S918.

In Step S918, the data input screen 300 given in Fig. 3 is displayed on the display section 27 again and the setting person is allowed to reenter the connection parameter requiring updating, according to the cause for the connection parameter error shown in Step S916.

Upon termination of the reentry of the connection parameter by the setting person, the setting person is allowed to click the OK button (not illustrated) of the data input screen 300. When the OK button has been clicked, the system proceeds to the Step S919.

In Step S919, evaluation is made to determine whether or not the image forming apparatus 20 should be rebooted in order to ensure that the reentered connection parameter permits the image forming apparatus 20 to be recognized by the electronic mail server 30.

If the result of this check is NO, namely if it has been determined that rebooting is not necessary, the system goes to Step S912 again, and the transceiver section 21 accesses the receive mail storage 32 according to the reentered connection parameter.

If the result of this check is YES, namely if it has been determined that rebooting is essential, then system proceeds to the Step S920.

In the Step S920, evaluation is made to determine whether or not the image forming apparatus 20 should be automatically rebooted.

If the result of this check is YES, namely if it has been determined that automatic rebooting of the image forming apparatus 20 is essential, then the system proceeds to the Step S925.

In the Step S925, the image forming apparatus 20 is automatically rebooted and the reentered connection parameter is determined to be valid. After rebooting of the image forming apparatus 20, the system returns to the Step S912, and the data processing section (CPU) 22 allows the transceiver section 21 to access the receive mail storage 32 according to the reentered connection parameter.

If the result of this check in Step S920 is NO, namely if it has been determined that automatic rebooting of the image forming apparatus 20 is not necessary, the system goes to Step S921, and a confirmation screen 810 for prompting the setting person to reboot the image forming apparatus 20 as given in Fig. 13 is displayed on the display section 27. At the same time, the setting person determines whether or not the image forming apparatus 20 is to be rebooted.

It is also possible to arrange such a configuration that, when the setting person has determined that the image forming apparatus 20 is not rebooted, the setting person is allowed to click the return button 814 on the confirmation screen 810, and the confirmation screen 610 given in Fig. 6(a) is displayed again.

When the setting person has clicked the END button 512 on the confirmation screen 610, the work of registering the image forming apparatus 20 for use in the network terminates without the image forming apparatus 20 being registered. When the OK button 812 is clicked, the system proceeds to the Step S922.

In Step S922, evaluation is made to determine whether or not the image forming apparatus 20 is being used or not. To put it more specifically, evaluation is made to see if the main units of the aforementioned copy machine, fax machine, scanner and a combination thereof are currently operating or not. It is also preferred to check if use of these main units is reserved or not, in addition to checking for the current status of operation.

If the result of this check is YES, namely if the image forming apparatus 20 is currently working, the system proceeds to the Step S923. If the result of this check is NO, namely if the image forming apparatus 20 is not working, the system proceeds to the Step S924.

The Step S923 is a step of waiting where the image forming apparatus 20 is not rebooted for a predetermined period of time. This waiting time can be set as desired.

After the lapse of the predetermined period of time, the system again returns to the Step S922.

In Step S924, the image forming apparatus 20 is rebooted and the reentered connection parameter is determined as valid.

The system again returns to Step S912 after the image forming apparatus 20 has been rebooted, and the reentered connection parameter is checked. The data processing section (CPU) 22 allows the transceiver section 21 to access the receive mail storage 32 according to the reentered connection parameter.

### Tenth Embodiment

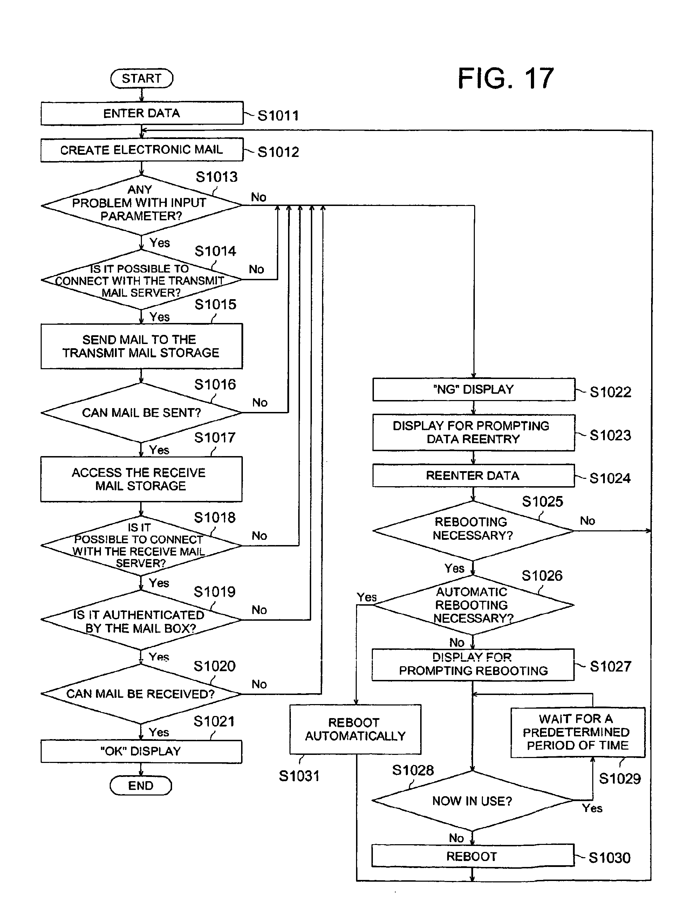

As shown in Fig. 17, the tenth embodiment of the method of registering the image forming apparatus for use in a network according to the present invention comprises: an input step (Step S1011) for prompting a predetermined connection parameter to be set and entered to connect the transceiver section 21 to both the transmit mail storage 31 and receive mail storage 32 of the electronic mail server 30; an electronic mail creation step (Step S1012) for creating the confirmation mail to be sent to the receive mail storage 32 specified by the connection parameter set and entered in the aforementioned input step, and for sending the confirmation mail to the transceiver section 21; transmit steps (Steps S1013 to 1015) for allowing the transceiver section to send the aforementioned confirmation electronic mail, using the parameter of connection between the aforementioned transceiver section and transmit mail storage, this parameter having been set and entered in the aforementioned input step; a reject confirmation determining step (Step S1016) for determining whether or not the confirmation mail sent in the aforementioned transmit step is rejected by the transceiver section, and for determining that the confirmation screen is invalid if it has been confirmed that the confirmation mail has been rejected; an access step (Step S1017) for allowing the transceiver section to access the receive mail storage, using the parameter for connection between the transceiver section and receive mail storage, this connection parameter having been set and entered in the input step; an access confirmation determining steps (Steps S1018 and 1019) for determining whether or not the access in the aforementioned access step has succeeded, and for determining that the parameter for the connection is invalid if it has been confirmed that the access failed; a receive confirmation determining step (step 1020) for determining whether or not confirmation mail has been received by the receive mail storage, and for determining that confirmation mail has not been sent and received correctly if confirmation of reception cannot be made; a display step (Step S1023) for displaying the result of check in the aforementioned parameter determining step and for displaying on the operating section 25 a message prompting reentry of the connection parameter when it has been determined that connection parameter is invalid; a re-input step (Step S1024) for prompting reentry of a new connection parameter in updating the connection parameter once set and entered, when it has been determined that the connection parameter is invalid as a result of checking the parameter; a reboot confirmation step (Step S1025) for determining whether or not the image forming apparatus 20 can be recognized by the electronic mail server 30 only when the image forming apparatus 20 as its own equipment is rebooted by the connection parameter entered in the re-input step; a reboot prompt display step (Step S1027) for indicating that rebooting of the image forming apparatus 20 is necessary when it has been determined in the reboot confirmation step that the connection parameter entered in the re-input step is a connection parameter necessary to reboot the image forming apparatus 20; and a reboot step (Step S1031) for automatically rebooting the image forming apparatus 20.

In Step S1011 as shown in Fig. 17, the setting person is allowed to use the operating section 25 to enter the connection parameter, similarly to the case of Step S110.

To put it more specifically, on the data input screen 300 as given in Fig. 3, the setting person is allowed to enter the connection parameter similarly to the case of Step S110 and to click the confirmation test start button 340, and the system proceeds to the Step S1012.

In Step S1012, confirmation mail is created by the data processing section (CPU) 22 according to the connection parameter entered in Step S1011, and the system proceeds to Step S1013.

In Step S1013, the connection parameter entered in the data processing section (CPU) 22 is subjected to syntax check.

If the result of the above check is YES, namely, if the entered connection parameter has no syntax error, then the system proceeds to Step S1014. If the result of the check is NO, namely, if the connection parameter has a syntax error, then the system proceeds to Step S1022.

In Step S1014, evaluation is made to determine whether or not the transceiver section 21 can be connected to the transmit mail storage 31, using the parameter for the connection between the transceiver section 21 and transmit mail storage 31.

To put it more specifically, the IP address of the transmit mail server entered in the IP address input window 312 of the transmit mail server shown in Fig. 3 is used to check whether or not the transceiver section 21 can be connected to the transmit mail storage 31.

If the result of the above check is YES, namely, if the transceiver section 21 can be connected with the transmit mail storage 31, then system proceeds to Step S1015. If the result of the above check is NO, namely, if the transceiver section 21 cannot be connected with the transmit mail storage 31, then system proceeds to Step S1022.

In the Step S1015, the transceiver section 21 transmits confirmation mail to the transmit mail storage 31 and the system goes to Step S1016.

In the Step S1016, evaluation is made to determine if the transmit mail storage 31 can send confirmation mail or not. In other words, evaluation is made to determine whether or not confirmation mail is returned to the transceiver section 21 without being sent to the transmit mail storage 31 when the confirmation mail is sent from the transceiver section 21 to the transmit mail storage 31. If the confirmation mail has been returned to the transceiver section 21, it is determined that transmission has failed or the parameter for this connection is invalid.

In Step S1016, if the result of evaluation is YES, namely if the confirmation mail has been sent, then the system goes to Step S1017. If it is NO, namely if the confirmation mail has been returned to the transceiver section 21, then the system goes to Step S1022.

In the Step S1017, the transceiver section 21 is allowed to access the receive mail storage 32 by the data processing section (CPU) 22 according to the aforementioned connection parameter, and the system proceeds to the Step S1018.

In Step S1018, evaluation is made to determine if the transceiver section 21 can be connected to the receive mail storage 32 , according to the parameter for connection between the transceiver section 21 and receive mail storage 32, wherein this parameter is entered in Step S1011.

To put it more specifically, evaluation is made to determine whether or not there is any receive mail server corresponding to the IP address entered into the IP address input window 322 of the receive mail server, namely, whether or not the transceiver section 21 can be connected to the receive mail storage 32 assigned in advance, based on the IP address.

When the result of evaluation is YES, namely when it can be connected to a predetermined receive storage, the system proceeds to Step S1019. If the result of evaluation is NO, namely if it cannot be connected, the system goes to Step S1022.

In Step S1019, evaluation is made to determine if the transceiver section 21 is authenticated or not by the receive mail storage 32, according to the parameter for connection between the transceiver section 21 and receive mail storage 32, wherein this parameter is entered in Step S1011.

To put it more specifically, evaluation is made to determine whether or not the transceiver section 21 is authenticated by the receive mail storage 32 according to the mailbox name and password entered into the mailbox name input window 324 and password input window 326 shown in Fig. 3.

When the result of evaluation is YES, namely when the transceiver section 21 has been authenticated by the receive mail storage 32, the system goes to Step S1020. If the result of evaluation is NO, namely if it is not authenticated, the system goes to Step S1022.

In Step S1020, evaluation is made to determine whether or not the confirmation mail sent from the image forming apparatus 20 to its own equipment has been received by the receive mail storage 32.

If the result of this check is YES, namely if the aforementioned confirmation mail has been received by the receive mail storage 32, the system proceeds to the Step S1021. If the result of this check is NO, namely if it has not been received, the system proceeds to the Step S1022.

In step 1021, the confirmation screen 430 indicating "OK" as given in Fig. 4(c) is displayed on the display section 27. It is also possible to make arrangements so that the image forming apparatus 20 can receive confirmation mail from the receive mail storage 32 at the discretion of the setting person or automatically.

In Step S1022, the confirmation screens 610 and 630 indicating "NG" as given in Figs. 6(a) and (c) are displayed on the display section 27.

On the confirmation screen 610 displayed when the result of the check in Step S1013 is NO, causes for the evaluated invalid connection parameter are indicated. These causes include "Input parameter error: Incorrect parameter. Check the parameter", and "Input parameter error: No parameter entry. Enter the parameter".

On the confirmation screen 610 displayed when the result of the check in Step S1014 is NO, causes for the evaluated invalid connection parameter are indicated. These causes include "Connection error: Check the IP address of the transmit mail server".

On the confirmation screen 610 to be displayed when the result of evaluation in Step S1016 is "NO", causes for evaluated invalid connection parameter are indicated. These causes include "Transmit error: Transmission has been rejected by the transmit mail server".

On the confirmation screen 630 to be displayed when the result of evaluation in Step S1018 is "NO", causes for evaluated invalid connection parameter are indicated. These causes include "Connection error: Check the IP address of the receive mail server".

On the confirmation screen 630 displayed when the result of evaluation in Step S1019 is "NO", causes for the evaluated invalid connection parameter are indicated. These causes include "Receive mailbox authentication error: Check the mailbox name.", "Receive mailbox authentication error:
Check the password" and "Receive mailbox authentication error: Check the mailbox name and password".

On the confirmation screen 630 to be displayed when the result of evaluation in Step S1020 is "NO", causes for evaluated invalid connection parameter are indicated. These causes include "Receive error: Reception has been rejected by the receive mail server".

When the Reentry button 614 has been clicked on the aforementioned confirmation screens 610 and 630, the system proceeds to the Step S1023 for prompting reentry of the connection parameter.

In Step S1023, a confirmation screen 710 for prompting the setting person to reenter the connection parameter given in Fig. 7 is displayed on the display section 27.

When it has been determined that reentry is necessary, the OK button 712 on the confirmation screen 710 is clicked by the setting person, and the system proceeds to the Step S1024.

In Step S1024, the data input screen 300 given in Fig. 3 is displayed on the display section 27 again and the setting person is allowed to reenter the connection parameter requiring updating, according to the cause for a connection parameter error shown in Step S1011.

Upon termination of the reentry of the connection parameter by the setting person, the setting person is allowed to click the OK button (not illustrated) of the data input screen 300. When the OK button has been clicked, the system proceeds to the Step S1025.

In Step S1025, evaluation is made to determine whether or not the image forming apparatus 20 should be rebooted in order to ensure that the reentered connection parameter permits the image forming apparatus 20 to be recognized by the electronic mail server 30.

If the result of this check is NO, namely if it has been determined that rebooting is not necessary, the system goes to Step S1012 again, and confirmation mail is created by the data processing section (CPU) 22 using the reentered connection parameter.

In Step S1026, evaluation is made to determine whether or not the image forming apparatus 20 should be automatically rebooted.

If the result of this check is YES, namely if it has been determined that automatic rebooting of the image forming apparatus 20 is essential, then the system proceeds to the Step S1031.

In the Step S1031, the image forming apparatus 20 is automatically rebooted and the reentered connection parameter is determined to be valid. After rebooting of the image forming apparatus 20, the system returns to the Step S1012, and confirmation mail is created by the data processing section (CPU) 22 using the reentered connection parameter.

If the result of this check in Step S1026 is NO, namely if it has been determined that automatic rebooting of the image forming apparatus 20 is not necessary, the system goes to Step S1027, and a confirmation screen 810 for prompting the setting person to reboot the image forming apparatus 20 as given in Fig. 13 is displayed on the display section 27. At the same time, the setting person determines whether or not the image forming apparatus 20 is to be rebooted.

It is also possible to arrange such a configuration that, when the setting person has determined that the image forming apparatus 20 is not rebooted, the setting person is allowed to click the return button 814 on the confirmation screen 810, and the confirmation screens 610 and 630 given in Figs. 6(a) and (c) are displayed again.

When the setting person has clicked the END button 512 on these confirmation screens 610 and 630, the work of registering the image forming apparatus 20 for use in the network terminates without the image forming apparatus 20 being registered. When the OK button 812 is clicked, the system proceeds to the Step S1028.

In Step S1028, evaluation is made to determine whether or not the image forming apparatus 20 is being used or not. To put it more specifically, evaluation is made to see if the main units of the aforementioned copy machine, fax machine, scanner and a combination thereof are currently operating or not. It is also preferred to check if use of these main units is reserved or not, in addition to checking for the current status of operation.

If the result of this check is YES, namely if the image forming apparatus 20 is currently working, the system proceeds to the Step S1029. If the result of this check is NO, namely if the image forming apparatus 20 is not working, the system proceeds to the Step S1030.

The Step S1029 is a step of waiting where the image forming apparatus 20 is not rebooted for a predetermined period of time. This waiting time can be set as desired.

After the lapse of the predetermined period of time, the system again returns to the Step S1028.

In Step S1030, the image forming apparatus 20 is rebooted and the reentered connection parameter is determined as valid.

The system again returns to Step S1012 after the image forming apparatus 20 has been rebooted, and confirmation mail is created by the data processing section (CPU) 22 using the reentered connection parameter.

### Eleventh Embodiment

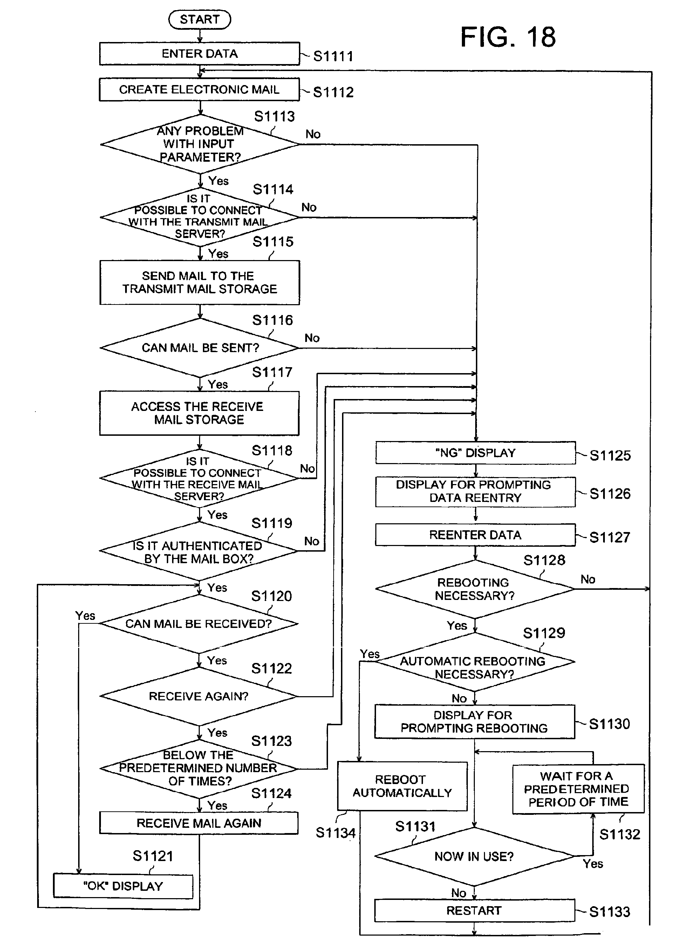

As shown in Fig. 18, the eleventh embodiment of the method of registering the image forming apparatus for use in a network according to the present invention comprises: an input step (Step S1111) for prompting a predetermined connection parameter to be set and entered to connect the transceiver section 21 to both the transmit mail storage 31 and receive mail storage 32 of the electronic mail server 30; an electronic mail creation step (Step S1112) for creating according to the setting and entry in the input step (Step S1111) the confirmation mail to be sent to the receive mail storage 32 specified by the connection parameter set and entered in the aforementioned input step, and for sending the confirmation mail to the transceiver section 21; transmit steps (Steps S1113 to 1115) for allowing the transceiver section to send the aforementioned confirmation electronic mail, using the parameter of connection between the aforementioned transceiver section and transmit mail storage, this parameter having been set and entered in the aforementioned input step; a reject confirmation determining step (Step S1111) for determining whether or not the confirmation mail sent in the aforementioned transmit step is rejected by the transceiver section, and for determining that the confirmation screen is invalid if it has been confirmed that the confirmation mail has been rejected; an access step (Step S1117) for allowing the transceiver section to access the receive mail storage, using the parameter for connection between the transceiver section and receive mail storage, this connection parameter having been set and entered in the input step; an access confirmation determining steps (Steps S1118 and 1119) for determining whether or not the access in the aforementioned access step has succeeded, and for determining that the parameter for the connection is invalid if it has been confirmed that the access failed; an access confirmation determining steps (Steps S1118 and 1119) for determining whether or not the access in the aforementioned access step has succeeded, and for determining that the parameter for the connection is invalid if it has been confirmed that the access failed; a receive confirmation determining step (Step S1120) for determining whether or not confirmation mail has been received by the receive mail storage, and for determining that confirmation mail has not been sent and received correctly if confirmation of reception cannot be made; a re-receive confirmation determining step (Step S1122) for determining whether or not reception should be performed again so that the aforementioned transceiver section accesses the receive mail storage again, when it has been determined in the aforementioned receive confirmation determining step that the confirmation mail is not received by the receive mail storage 32; a number-of-times determining step (Step S1123) wherein evaluation is made to determine whether or not re-reception has been done a predetermined number of times when it has been determined that re-reception should be performed in the aforementioned re-receive confirmation determining step, and the reception of confirmation mail has not been performed correctly when it has been determined that re-reception has already been done a predetermined number of times; a display step (Step S1126) for displaying the result of check in the aforementioned parameter determining step and for displaying on the operating section 25 a message prompting reentry of the connection parameter when it has been determined that connection parameter is invalid; a re-input step (Step S1127) for prompting reentry of a new connection parameter in updating the connection parameter once set and entered, when it has been determined that the connection parameter is invalid as a result of checking the parameter; a reboot confirmation step (Step S1128) for determining whether or not the image forming apparatus 20 can be recognized by the electronic mail server 30 only when the image forming apparatus 20 as its own equipment is rebooted by the connection parameter entered in the re-input step; a reboot prompt display step (Step S1130) for indicating that rebooting of the image forming apparatus 20 is necessary when it has been determined in the reboot confirmation step that the connection parameter entered in the re-input step is a connection parameter necessary to reboot the image forming apparatus 20; and a reboot step (Step S1133) for automatically rebooting the image forming apparatus 20.

In Step S1111 as shown in Fig. 18, the setting person is allowed to use the operating section 25 to enter the connection parameter, similarly to the case of Step S110.

To put it more specifically, on the data input screen 300 as given in Fig. 3, the setting person is allowed to enter the connection parameter similarly to the case of Step S110 and to click the confirmation test start button 340, and the system proceeds to the Step S1112.

In Step S1112, confirmation mail is created by the data processing section (CPU) 22 according to the connection parameter entered in Step S1111, and the system proceeds to Step S1113.

In Step S1113, the connection parameter entered in the data processing section (CPU) 22 is subjected to syntax check.

If the result of the above check is YES, namely, if the entered connection parameter has no syntax error, then the system proceeds to Step S1114. If the result of the check is NO, namely, if the connection parameter has a syntax error, then the system proceeds to Step S1125.

In Step S1114, evaluation is made to determine whether or not the transceiver section 21 can be connected to the transmit mail storage 31, using the parameter for the connection between the transceiver section 21 and transmit mail storage 31.

To put it more specifically, the IP address of the transmit mail server entered in the IP address input window 312 of the transmit mail server shown in Fig. 3 is used to check whether or not the transceiver section 21 can be connected to the transmit mail storage 31.

If the result of the above check is YES, namely, if the transceiver section 21 can be connected with the transmit mail storage 31, then system proceeds to Step S1115. If the result of the above check is NO, namely, if the transceiver section 21 cannot be connected with the transmit mail storage 31, then system proceeds to Step S1125.

In Step S1115, the transceiver section 21 sends confirmation mail to the transmit mail storage 31 and the system proceeds to the Step S1116.

In Step S1116, evaluation is made to determine whether or not the transmit mail storage 31 can send the confirmation mail. Namely evaluation is made to determine whether or not confirmation mail has been returned to the transceiver section 21 without being sent to the transmit mail storage 31 when sent from the transceiver section 21 to the transmit mail storage 31. If confirmation mail has been returned to the transceiver section 21, it is determined that confirmation mail cannot be sent, namely the parameter for this connection is invalid.

In Step S1116, if the result of the above check is YES, namely if confirmation mail has been sent, the system proceeds to the Step S1117. If the result of the check is NO, namely, if the confirmation mail has been returned to the transceiver section 21, the system proceeds to the Step 51125.

In Step S1117, the transceiver section 21 is allowed to access the receive mail storage 32 by the data processing section (CPU) 22 using the connection parameter. Then the system proceeds to the Step S1118.

In Step S1118, evaluation is made to determine whether or not the transceiver section 21 can be connected to the receive mail storage 32 by the parameter for connection between the transceiver section 21 and receive mail storage 32 entered in the Step 51111.

To put it more specifically, evaluation is made to determine whether or not there is the receive mail server corresponding to the IP address entered in the IP address input window 322 of the receive mail server shown in Fig. 3, namely whether or not the transceiver section 21 can be connected to the pre-assigned receive mail storage 32 according to the IP address.

If the result of this check is YES, namely if the transceiver section 21 can be connected to a predetermined receive mail storage, the system proceeds to the Step S1119. If the result of this check is NO, namely if it cannot be connected, the system proceeds to the Step S1125.

In Step S1119, evaluation is made to determine whether or not the transceiver section 21 can be connected to the receive mail storage 32, according to the parameter for connection between the transceiver section 21 and receive mail storage 32 entered in Step S1111.

To put it more specifically, evaluation is made to determine whether or not the transceiver section 21 is authenticated by the receive mail storage 32 according to the mailbox name and password entered into the mailbox name input window 324 and password input window 326 shown in Fig. 3.

When the result of evaluation is YES, namely when the transceiver section 21 has been authenticated by the receive mail storage 32, the system goes to Step S1120. If the result of evaluation is NO, namely if it is not authenticated, the system goes to Step S1125.

In Step S1120, evaluation is made to determine whether or not the confirmation mail sent from the image forming apparatus 20 to its own equipment has been received by the receive mail storage 32.

If the result of this check is YES, namely if the aforementioned confirmation mail has been received by the receive mail storage 32, the system proceeds to the Step S1121. If the result of this check is NO, namely if it has not been received, the system proceeds to the Step S1122.

In Step S1121, the confirmation screen 430 given in Fig. 4(c) is displayed on the display section 27. It is also possible to make arrangements so that the image forming apparatus 20 can receive confirmation mail from the receive mail storage 32 at the discretion of the setting person or automatically.

In Step S1122, the transceiver section 21 is allowed to access the receive mail storage 32 again, and evaluation is made to determine whether or not confirmation mail can be received again.

If the result of this check is YES, namely if confirmation mail can be received again, the system proceeds to the Step S1123. If it is NO, namely if confirmation mail cannot be received again, the system proceeds to the Step S1125.

In Step S1123, evaluation is made to determine whether or not the number of times confirmation mail has been received is below the predetermined number of times. The aforementioned predetermined number of times is not subjected to any restriction. It refers to any preset number of times.

In Step S1123, it is also preferred that evaluation be made to determine whether or not a predetermined time has elapsed during the time from reception of confirmation mail (Step S1120) to re-reception. The aforementioned time is not subjected to any restriction. It refers to any preset number of times. In Step S1123, it is also preferred that re-reception of confirmation mail be evaluated by combination of "a predetermined number of times" with "a predetermined time".

If the result of this check in Step S1123 is YES, namely if the number of times confirmation mail is received is below the predetermined number of times, the system proceeds to the Step S1124. confirmation mail is received again and the system returns to the Step S1120.

If the result of this check is NO, namely if the number of times confirmation mail has been received is above the predetermined number of times, the system proceeds to the Step S1125.

In Step S1125, the confirmation screens 610 and 630 indicating "NG" as given in Figs. 6(a) and (c) are displayed on the display section 27.

On the confirmation screen 610 displayed when the result of the check in Step S1113 is NO, causes for the evaluated invalid connection parameter are indicated. These causes include "Input parameter error: Incorrect parameter. Check the parameter", and "Input parameter error: No parameter entry. Enter the parameter".

On the confirmation screen 610 displayed when the result of the check in Step S1114 is NO, causes for the evaluated invalid connection parameter are indicated. These causes include "Connection error: Check the IP address of the transmit mail server".

On the confirmation screen 610 to be displayed when the result of evaluation in Step S1116 is "NO", causes for evaluated invalid connection parameter are indicated. These causes include "Transmit error: Transmission has been rejected by the transmit mail server".

On the confirmation screen 630 to be displayed when the result of evaluation in Step S1118 is "NO", causes for evaluated invalid connection parameter are indicated. These causes include "Connection error: Check the IP address of the receive mail server".

On the confirmation screen 630 displayed when the result of evaluation in Step S1119 is "NO", causes for the evaluated invalid connection parameter are indicated. These causes include "Receive mailbox authentication error: Check the mailbox name.", "Receive mailbox authentication error: Check the password" and "Receive mailbox authentication error: Check the mailbox name and password".

On the confirmation screen 630 to be displayed when the result of evaluation in Step S1122 is "NO", causes for evaluated invalid connection parameter are indicated. These causes include "Receive error: Reception has been rejected by the receive mail server".

On the confirmation screen 630 to be displayed when the result of evaluation in Step S1123 is "NO", causes for evaluated invalid connection parameter are indicated. These causes include "Receive error: Reception has been rejected by the receive mail server".

When the Reentry button 614 has been clicked on the aforementioned confirmation screens 610 and 630, the system proceeds to the Step S1126 for prompting reentry of the connection parameter.

In Step S1126, a confirmation screen 710 for prompting the setting person to reenter the connection parameter given in Fig. 7 is displayed on the display section 27.

When it has been determined that reentry is necessary, the OK button 712 on the confirmation screen 710 is clicked by the setting person, and the system proceeds to the Step S1127.

In Step S1127, the data input screen 300 given in Fig. 3 is displayed on the display section 27 again and the setting person is allowed to reenter the connection parameter requiring updating, according to the cause for a connection parameter error shown in Step S1011.

Upon termination of the reentry of the connection parameter by the setting person, the setting person is allowed to click the OK button (not illustrated) of the data input screen 300. When the OK button has been clicked, the system proceeds to the Step S1128.

In Step S1128, evaluation is made to determine whether or not the image forming apparatus 20 should be rebooted in order to ensure that the reentered connection parameter permits the image forming apparatus 20 to be recognized by the electronic mail server 30.

If the result of this check is NO, namely if it has been determined that rebooting is not necessary, the system goes to Step S1112 again, and confirmation mail is created by the data processing section (CPU) 22 using the reentered connection parameter.

If the result of this check is YES, namely if it has been determined that rebooting of the image forming apparatus 20 is essential, then the system proceeds to the Step S1129.

In the Step S1129, evaluation is made to determine whether or not the image forming apparatus 20 should be automatically rebooted.

If the result of this check is YES, namely if it has been determined that automatic rebooting of the image forming apparatus 20 is essential, then the system proceeds to the Step S1134.

In the Step S1134, the image forming apparatus 20 is automatically rebooted and the reentered connection parameter is determined to be valid. After rebooting of the image forming apparatus 20, the system returns to the Step S1112, and confirmation mail is created by the data processing section (CPU) 22 using the reentered connection parameter.

If the result of this check in Step S1129 is NO, namely if it has been determined that automatic rebooting of the image forming apparatus 20 is not necessary, the system goes to Step S1130, and a confirmation screen 810 for prompting the setting person to reboot the image forming apparatus 20 as given in Fig. 13 is displayed on the display section 27. At the same time, the setting person determines whether or not the image forming apparatus 20 is to be rebooted.

It is also possible to arrange such a configuration that, when the setting person has determined that the image forming apparatus 20 is not rebooted, the setting person is allowed to click the return button 814 on the confirmation screen 810, and the confirmation screens 610 and 630 given in Figs. 6(a) and (c) are displayed again.

When the setting person has clicked the END button 512 on these confirmation screens 610 and 630, the work of registering the image forming apparatus 20 for use in the network terminates without the image forming apparatus 20 being registered. When the OK button 812 is clicked, the system proceeds to the Step S1131.

In Step S1131, evaluation is made to determine whether or not the image forming apparatus 20 is being used or not. To put it more specifically, evaluation is made to see if the main units of the aforementioned copy machine, fax machine, scanner and a combination thereof are currently operating or not. It is also preferred to check if use of these main units is reserved or not, in addition to checking for the current status of operation.

If the result of this check is YES, namely if the image forming apparatus 20 is currently working, the system proceeds to the Step S1132. If the result of this check is NO, namely if the image forming apparatus 20 is not working, the system proceeds to the Step S1133.

The Step S1132 is a step of waiting where the image forming apparatus 20 is not rebooted for a predetermined period of time. This waiting time can be set as desired.

After the lapse of the predetermined period of time, the system again returns to the Step S1028.

In Step S1133, the image forming apparatus 20 is rebooted and the reentered connection parameter is determined as valid. The system again returns to Step S1112 after the image forming apparatus 20 has been rebooted, and confirmation mail is created by the data processing section (CPU) 22 using the reentered connection parameter.

The present invention allows a parameter setting person to check if an image forming apparatus can transmit and/or receive electronic mail correctly or not. In the event of a connection parameter setting error, it permits the setting person to identify an incorrect setting item and to check the troubleshooting procedure. Further, an image forming apparatus is capable of self-transmission and reception of electronic mail without being affected by delay in distribution of electronic mail to a mail server. When the connection parameter requiring rebooting of the image forming apparatus has been modified, a message indicating the need for rebooting can be displayed to the setting person.

Disclosed embodiments can be varied by a skilled person without departing from the scope of the invention.

## Claims

1. A system for forming an image and communicating electronic mails, including a transmit mail and a receive mail, through a network (40), comprising:
a server (30), that includes a transmit-mail storage (31) for temporarily storing said transmit mail to be transmitted via said network, and a receive-mail storage (32) for temporarily storing said receive mail received via said network; and
an image-forming apparatus (20), that includes a transceiver section (21) for transmitting a transmit data set to be transmitted on said transmit mail and for receiving a receive data set received on said receive mail, and a data-processing section (22) for processing said receive data set received by said transceiver section;
wherein said server is coupled to both said network and said image-forming apparatus, so as to communicate said transmit data set and said receive data set on said electronic mails through said network; and
wherein said image-forming apparatus further includes:
an operating section (25) to manually input a plurality of connecting parameters;
a connecting data storage (26) to store said plurality of connecting parameters therein; and
a displaying section (27) to display said plurality of connecting parameters inputted by said operating section; and
wherein said data-processing section determines whether or not each of said plurality of connecting parameters is effective by monitoring a connecting status between said transceiver section and said server, and sends first displaying data for displaying a result determined by said data-processing section to said displaying section, which displays said result on a displaying screen; and
wherein, when said data-processing section determines that a specific one of said connecting parameters is ineffective, said data-processing section also sends a second displaying data for displaying a second message urging a reentry of a new connecting parameter corresponding to a cause of an error as a substitute for said specific one to said displaying section, so that said displaying section displays said second message on said displaying screen, as needed;
wherein said data-processing section determines whether or not said server can recognize a new connecting parameter, reentered from said operating section, without rebooting said image-forming apparatus; said system **characterised by** : when said data-processing section determines that said server cannot recognize said new connecting parameter without rebooting said image-forming apparatus, said data-processing section sends a fourth displaying data, for displaying a fourth message indicating a necessity of rebooting said image-forming apparatus, to said displaying section, so that said displaying section displays said fourth message on said displaying screen.

2. The system of claim 1,
wherein, when said server rejects a confirmation mail sent from said transceiver section in said operation for confirming connections between said server and said transceiver section with employing said plurality of connecting parameters, said data-processing section determines that said plurality of connecting parameters, inputted from said operating section, are ineffective.

3. The system of claim 1,
wherein, when said transceiver section fails to achieve an accessing operation for accessing said receive-mail storage from said transceiver section in said operation for confirming connections between said server and said transceiver section with employing said plurality of connecting parameters, said data-processing section determines that said plurality of connecting parameters, inputted from said operating section, are ineffective.

4. The system of claim 1,
wherein, in said operation for confirming connections between said server and said transceiver section with employing said plurality of connecting parameters,
when said server rejects a confirmation mail sent from said transceiver section, or
when said transceiver section fails to achieve an accessing operation for accessing said receive-mail storage from said transceiver section,
said data-processing section determines that said plurality of connecting parameters, inputted from said operating section, are ineffective, and
said data-processing section also sends a third displaying data, for displaying a third message indicating an inability of normal communicating operation for said electronic mails, to said displaying section, so that said displaying section displays said third message on said displaying screen, as needed.

5. The system of claim 4,
wherein, when said data-processing section confirms that said receive-mail storage has not received a confirmation mail, said data-processing section controls said transceiver section so as to repeat accessing operations for accessing said receive-mail storage a predetermined number of times at a predetermined time interval; and
wherein, if said data-processing section still confirms that said receive-mail storage has not received a confirmation mail after said predetermined number of said accessing operations have completed, said data-processing section sends said third displaying data to said displaying section.

6. The system of claim 1,
wherein said data-processing section determines whether or not said server can recognize a new connecting parameter, reentered from said operating section, without rebooting said image-forming apparatus; and
wherein, when said data-processing section determines that said server cannot recognize said new connecting parameter without rebooting said image-forming apparatus, said data-processing section automatically reboots said image-forming apparatus.

7. The system of claim 1, wherein, when said connecting parameters are manually inputted from said operating section, a confirmation-starting command, to start an operation for confirming connections between said server and said transceiver section, is activated before said data-processing section determines whether or not each of said plurality of connecting parameters is effective.

8. A method for registering an image-forming apparatus (20) into a network (40) of a system for forming an image and communicating electronic mails, including a transmit mail and a receive mail, through said network, and said system comprising a server (30) that includes a transmit-mail storage (31) for temporarily storing said transmit mail to be transmitted via said network and a receive-mail storage (32) for temporarily storing said receive mail received via said network, and said image-forming apparatus that includes a transceiver section (21) for transmitting a transmit data set to be transmitted on said transmit mail and for receiving a receive data set received on said receive mail and a data-processing section (22) for processing said receive data set received by said transceiver section, said method comprising the steps of:
manually inputting (S110; S210; S310; S411; S511; S611; S711; S811; S911; S1011; S1111) a plurality of connecting parameters for connecting said transceiver section with both said transmit-mail storage and said receive-mail storage of said server;
determining (S120; S230; S413; S513; S612; S712; S813; S1013; S1113) whether or not each of said connecting parameters is effective by monitoring a connecting status between said transceiver section and said server; and
displaying a first message (S130; S140; S270; S280; S350; S360; S421; S422; S521; S525; S613; S614; S713; S714; S817; S818; S915; S916; S1021; S1022; S1121; S1125) indicating a result determined in said determining step on a displaying screen (27); and
displaying a second message (S615; S715; S819; S917; S1023; S1126) urging a reentry of said connecting parameter corresponding to a cause of an error as a substitute for a specific one of said connecting parameters, when it is determined that said specific one is ineffective in said determining step;
when any one of said connecting parameters, which was once inputted, is changed to said new connecting parameter, further comprising the steps of:
inputting (S616; S820; S918; S1024; S1127) said new connecting parameter; said method **characterized by**:
determining (S617; S821; S920; S1025; S1128) whether or not said server can recognize said new connecting parameter, without rebooting said image-forming apparatus; and
displaying (S618; S823; S921; S1027; S1130) a fourth message indicating a necessity of rebooting said image-forming apparatus on said displaying screen, when determining that said server cannot recognize said new connecting parameter without rebooting said image-forming apparatus.

9. The method of claim 8,
wherein said determining step further comprises the steps of:
controlling (S250; S415; S515; S815; S1015; S1115) said transceiver section so as to conduct a sending operation of a confirmation mail by employing said plurality of connecting parameters; and
judging (S260; S416; S516; S816; S1016; S1116) whether or not said confirmation mail is rejected in said transceiver section; and
wherein, when judging that said confirmation mail is rejected in said judging step, said plurality of connecting parameters are determined as ineffective parameters.

10. The method of claim 8,
wherein said determining step further comprises the steps of:
controlling (S320; S417; S517; S912; S1017; S1117) said transceiver section so as to conduct an accessing operation for accessing said receive-mail storage of said server by employing said plurality of connecting parameters; and
judging (S330; S418; S518; S913; S1018; S1118) whether or not said accessing operation is failed; and
wherein, when judging that said accessing operation is failed in said judging step, said plurality of connecting parameters are determined as ineffective parameters.

11. The method of claim 8,
wherein said determining step further comprises the steps of:
controlling (S415; S515; S1015; S1115) said transceiver section so as to conduct a sending operation of a confirmation mail by employing said plurality of connecting parameters;
judging (S416; S516; S1016; S1116) whether or not said confirmation mail is rejected in said transceiver section;
controlling (S417; S517; S1017; S1117) said transceiver section so as to conduct an accessing operation for accessing said receive-mail storage of said server by employing said plurality of connecting parameters;
judging (S418; S518; S1018; S1118) whether or not said accessing operation is failed; and
judging (S420; S520; S1020; S1120) whether or not said confirmation mail is received at said receive-mail storage; and
wherein, when judging that said confirmation mail is rejected in said judging step, said plurality of connecting parameters are determined as ineffective parameters; and
wherein, when judging that said accessing operation is failed in said judging step, said plurality of connecting parameters are determined as ineffective parameters; and
wherein, when judging that said confirmation mail is not received by said receive-mail storage, it is determined that receiving/transmitting operations cannot be normally conducted.

12. The method of claim 11,
wherein, when it is confirmed that said confirmation mail is not received by said receive-mail storage, said judging step of confirmation mail reception further comprises the steps of:
judging (S522; S1122) whether or not said transceiver section should perform again an accessing operation for accessing said receive-mail storage; and
judging (S523; S1123) whether or not a number of repetitions of accessing operations for accessing said receive-mail storage already exceeds a predetermined number of times, when judging that said transceiver section should perform again said accessing operation; and
wherein, judging that said number of repetitions of accessing operations for accessing said receive-mail storage already exceeds said predetermined number of times, it is determined that receiving operations of said electronic mail could not be normally conducted.

13. The method of claim 8, when any one of said connecting parameters, which was once inputted, is changed to said new connecting parameter, further comprising the steps of:
inputting (S716; S820; S918; S1024; S1127) said new connecting parameter;
determining (S717; S821; S919; S1025; S1128) whether or not said server can recognize said new connecting parameter, without rebooting said image-forming apparatus; and
rebooting (S718; S827; S925; S1031; S1134) said image-forming apparatus in an automatic mode, when determining that said server cannot recognize said new connecting parameter without rebooting said image-forming apparatus.

## Patentansprüche

1. System zum Ausbilden eines Bildes und zur Kommunikation mittels elektronischer Mails, einschließlich einer Übertragungsmail und einer Empfangsmail, über ein Netzwerk (40) mit:
einem Server (30), der einen Speicher (31) für Übertragungsmails zum vorübergehenden Speichern der Übertragungsmail, die über das Netzwerk zu übertragen ist, und einen Speicher (32) für Empfangsmails zum vorübergehenden Speichern der Empfangsmail, die über das Netzwerk empfangen wird, aufweist; und
einer Bildgebungsvorrichtung (20), die einen Transceiver-Abschnitt (21) zum Übertragen eines Übertragungsdatensatzes, der mit einer Übertragungsmail zu übertragen ist, und zum Empfangen eines Empfangsdatensatzes, der von einer Empfangsmail empfangen wird, umfasst, und mit einem Datenverarbeitungsabschnitt (22) zum Verarbeiten des Empfangsdatensatzes, der von dem Transceiver-Abschnitt empfangen wurde;
wobei der Server sowohl mit dem Netzwerk als auch mit der Bildgebungsvorrichtung verbunden ist, um so den Übertragungsdatensatz und den Empfangsdatensatz der elektronischen Mails über das Netzwerk zu kommunizieren; und
wobei die Bildgebungsvorrichtung des Weiteren umfasst:
ein Betriebsabschnitt (25) zum manuellen Eingeben einer Mehrzahl von Verbindungsparametern;
einem Kommunikationsdatenspeicher (26) zum Speichern der Mehrzahl von Verbindungsparametern; und
einem Anzeigeabschnitt (27) zum Anzeigen der Werte von Verbindungsparametern, die durch den Betriebsabschnitt eingegeben wurden; und
wobei der Datenverarbeitungsabschnitt bestimmt, ob jeder der Mehrzahl von Verbindungsparametern effektiv ist, durch
Überwachen eines Verbindungsstatuses zwischen dem Transceiver-Abschnitt und dem Server, und erste Anzeigedaten zum Anzeigen eines Ergebnisses, das durch den Datenverarbeitungsabschnitt bestimmt wurde, an den Anzeigeabschnitt sendet, der das Ergebnis auf einem Anzeigeschirm anzeigt; und
wobei, wenn der Datenverarbeitungsabschnitt bestimmt, dass ein bestimmter Verbindungsparameter ineffektiv ist, der Datenverarbeitungsabschnitt auch zweite Anzeigedaten, zum Anzeigen einer zweiten Mitteilung, die eine Neueingabe eines neuen Verbindungsparameters verlangt, entsprechend einer Ursache eines Fehlers, als ein Ersatz für den Bestimmten, an den Anzeigeabschnitt sendet, so dass der Anzeigeabschnitt die zweite Mitteilung auf dem Anzeigeschirm nach Bedarf anzeigt;
wobei der Datenverarbeitungsabschnitt bestimmt, ob der Server einen neuen Verbindungsparameter erkennen kann, der von dem Betriebsabschnitt zurückgegeben wird, ohne die Bildgebungsvorrichtung zu rebooten;
wobei das System **gekennzeichnet ist durch**:
wenn der Datenverarbeitungsabschnitt bestimmt, dass der Server den neuen Verbindungsparameter ohne Rebooten der Bildgebungsvorrichtung nicht erkennen kann, der Datenverarbeitungsabschnitt vierte Anzeigedaten zum Anzeigen einer vierten Mitteilung, die eine Notwendigkeit des Rebootens der Bildgebungsvorrichtung anzeigt, an den Anzeigeabschnitt sendet, so dass der Anzeigeabschnitt die vierte Mitteilung auf dem Anzeigeschirm anzeigt.

2. System nach Anspruch 1, bei dem:
wenn der Server eine Bestätigungsmail, die von dem Transceiver-Abschnitt in dem Betrieb zur Bestätigung der Verbindungen zwischen dem Server und dem Transceiver-Abschnitt unter Verwendung der Mehrzahl von Verbindungsparametern zurückweist, der Datenverbindungsabschnitt bestimmt, dass die Mehrzahl der Verbindungsparameter, die von dem Betriebsabschnitt eingegeben wurden, ineffektiv sind.

3. System nach Anspruch 1, bei dem:
wenn der Transceiver-Abschnitt bei der Erzielung eines Zugriffsvorgangs zum Zugreifen auf den Empfangsmailspeicher von den Transceiver-Abschnitt bei dem Betrieb zur Bestätigung der Verbindungen zwischen dem Server und dem Transceiver-Abschnitt unter Verwendung der Mehrzahl von Verbindungsparametern fehlschlägt, der Datenverarbeitungsabschnitt bestimmt, dass die Mehrzahl der Verbindungsparameter, die von dem Betriebsabschnitt eingegeben wurden, ineffektiv sind.

4. System nach Anspruch 1, bei dem:
in dem Betrieb zur Bestätigung der Verbindungen zwischen dem Server und dem Transceiver-Abschnitt unter Verwendung der Mehrzahl von Verbindungsparametern, wenn der Server eine Bestätigungsmail abweist, die von dem Transceiver-Abschnitt gesendet wurde, oder
wenn der Transceiver-Abschnitt bei der Erzielung eines Zugriffvorgangs zum Zugreifen auf den Empfangsmailspeicher von dem Transceiver-Abschnitt fehlschlägt,
der Datenverarbeitungsabschnitt bestimmt, dass die Mehrzahl von Verbindungsparametern, die von dem Betriebsabschnitt eingegeben wurden, ineffektiv sind, und
wobei der Datenverarbeitungsabschnitt auch dritte Anzeigedaten zum Anzeigen einer dritten Mitteilung, die eine Unfähigkeit zum normalen Kommunikationsbetrieb für die elektronischen Mails anzeigt, an den Anzeigeabschnitt sendet, so dass der Anzeigeabschnitt die dritte Mitteilung auf dem Anzeigeschirm nach Bedarf anzeigt.

5. System nach Anspruch 4, bei dem
wenn der Datenverarbeitungsabschnitt bestätigt, dass der Empfangsmailspeicher keine Bestätigungsmail erhalten hat, der Datenverarbeitungsabschnitt den Transceiver-Abschnitt so steuert, dass ein Zugriffsvorgang zum Zugreifen auf den Empfangsmailspeicher eine vorgegebene Anzahl von Malen mit einem vorgegeben Zeitintervall wiederholt wird; und
wobei, wenn der Datenverarbeitungsabschnitt weiterhin bestätigt, dass der Empfangsmailspeicher keine Bestätigungsmail nach einer vorgegeben Anzahl von Malen nach Beendigung der Zugriffsvorgänge erhalten hat, der Datenverarbeitungsabschnitt die dritten Anzeigedaten an den Anzeigeabschnitt sendet.

6. System nach Anspruch 1, bei dem
der Datenverarbeitungsabschnitt bestimmt, ob der Server einen neuen Verbindungsparameter erkennen kann oder nicht, der von dem Betriebsabschnitt neu eingegeben wurde, ohne die Bildgebungsvorrichtung zu rebooten; und,
wobei, wenn der Datenverarbeitungsabschnitt bestimmt, dass der Server den neuen Verbindungsparameter nicht ohne Rebooten der Bildgebungsvorrichtung erkennen kann, der Datenverarbeitungsabschnitt automatisch die Bildgebungsvorrichtung rebootet.

7. System nach Anspruch 1, bei dem, die Verbindungsparameter per Hand von dem Betriebsabschnitt eingegeben werden, ein Bestätigungsanfangsbefehl zum Anfangen eines Betriebs zur Bestätigung der Verbindungen zwischen dem Server und dem Transceiver-Abschnitt in Betrieb genommen wird, bevor der Datenverarbeitungsabschnitt bestimmt, ob jede der Mehrzahl von Verbindungsparametern effektiv ist oder nicht.

8. Verfahren zum Registrieren einer Bildgebungsvorrichtung (20) in einem Netzwerk (40) eines Systems zum Bilden eines Bildes und zur Kommunikation mit elektronischen Mails, einschließlich einer Übertragungsmail und einer Empfangsmail über das Netzwerk, wobei das System einen Server (30) umfasst, der einen Übertragungsmailspeicher (31) zum vorübergehenden Speichern der Übertragungsmail, die über das Netzwerk zu übertragen ist, und einen Empfangsmailspeicher (32) zum vorübergehenden Speichern der Empfangsmail, die über das Netzwerk empfangen wird, aufweist, und wobei die Bildgebungsvorrichtung, einen Transceiver-Abschnitt (21) zum Übertragen eines Übertragungsdatensatzes, der mit der Übertragungsmail zu übertragen ist, und zum Empfangen eines Empfangsdatensatzes, der mit der Empfangsmail zu empfangen ist, und einen Datenverarbeitungsabschnitt (22) zum Verarbeiten des Empfangsdatensatzes, der von dem Transceiver-Abschnitt empfangen wurde, aufweist, wobei das Verfahren die Schritte umfasst:
manuelles Eingeben (S110, S210, S310, S411, S511, S611, S711, S811, S911, S1011, S1111) einer Mehrzahl von Verbindungsparametern zur Verbindung des Transceiver-Abschnitts sowohl mit dem Übertragungsmailspeicher als auch dem Empfangsmailspeicher des Servers;
Bestimmen (S120, S230, S413, S513, S612, S712, S813, S1013, S1113), ob jeder der Verbindungsparameter effektiv ist oder nicht, durch Überwachen eines Verbindungsstatuses zwischen dem Transceiver-Abschnitt und dem Server;
Anzeigen einer ersten Mitteilung (S130, S140, S270, S280, S350, S360, S421, S422, S521, S525, S613, S614, S713, S714, S817, S818, S915, S916, S1021, S1022, S1121, S1125), die ein Ergebnis, das von dem Bestimmungsschritt bestimmt wurde, auf einem Anzeigeschirm (27) anzeigt; und
Anzeigen einer zweiten Mittelung (S615, S715, S819, S917, S1023, S1126), die eine neue Eingabe des Verbindungsparameters veranlasst, entsprechend einer Ursache eines Fehlers, als ein Ersatz für einen Bestimmten der Verbindungsparameter, wenn bestimmt wird, dass der bestimmte Parameter bei dem Bestimmungsschritt ineffektiv ist;
wenn einer der Verbindungsparameter, die einmal eingegeben waren, zu einem neuen Verbindungsparameter geändert wird, des Weiteren die Schritte vorgesehen sind:
Eingaben (S616, S820, S918, S1024, S1127) des neuen Verbindungsparameters;
wobei das Verfahren **gekennzeichnet ist durch**:
Bestimmen (S617, S821, S920, S1025, S1128), ob der Server den neuen Verbindungsparameter ohne Rebooten der Bildgebungsvorrichtung erkennen kann oder nicht;
Anzeigen (S618, S823, S921, S1027, S1130) einer vierten Mitteilung, die eine Notwendigkeit des Rebootens der Bildgebungsvorrichtung anzeigt, auf dem Anzeigeschirm, wenn bestimmt wird, dass der Server den neuen Verbindungsparameter nicht ohne Rebooten der Bildgebungsvorrichtung erkennen kann.

9. Verfahren nach Anspruch 8, wobei der Bestimmungsschritt des Weiteren die Schritte umfasst:
Steuern (S250, S415, S515, S815, S1015, S1115) des Transceiver-Abschnitts, um so einen Sendevorgang einer Bestätigungsmail unter Verwendung der Mehrzahl von Verbindungsparametern durchzuführen; und
Entscheiden (S260, S416, S516, S816, S1016, S1116), ob die Bestätigungsmail in dem Transceiver-Abschnitt zurückgewiesen wird oder nicht; und
wobei, wenn in dem Entscheidungsschritt bestimmt wird, dass die Bestätigungsmail zurückgewiesen wird, die Mehrzahl von Verbindungsparametern als ineffektive Parameter bestimmt werden.

10. Verfahren nach Anspruch 8, bei dem der Bestimmungsschritt des Weiteren die Schritte umfasst:
Steuern (S320, S417, S517, S912, S1017, S1117) des Transceiver-Abschnitts, so dass ein Zugriffsvorgang zum Zugreifen auf den Empfangsmailspeicher des Servers, unter Verwendung einer Mehrzahl der Verbindungsparameter durchgeführt wird;
Entscheiden (S330, S418, S518, S913, S1018, S1118), ob der Zugriffsvorgang fehlgeschlagen ist oder nicht; und
wobei, wenn in dem Entscheidungsschritt entschieden wird, dass der Zugriffsvorgang fehlgeschlagen ist, die Mehrzahl von Verbindungsparametern als ineffektive Parameter bestimmt werden.

11. Verfahren nach Anspruch 8, bei dem der Bestimmungsschritt des Weiteren die Schritte umfasst:
Steuern (S415, S515, S1015, S1115) des Transceiver-Abschnitts, so dass ein Sendevorgang einer Bestätigungsmail unter Verwendung der Mehrzahl von Verbindungsparametern durchgeführt wird;
Entscheiden (S416, S516, S1016, S1116), ob die Bestätigungsmail von dem Transceiver-Abschnitt zurückgewiesen wird oder nicht;
Steuern (S417, S517, S1017, S1117) des Transceiver-Abschnitts, um so ein Zugriffsvorgang zum Zugreifen auf den Empfangsmailspeicher des Servers unter Verwendung der Mehrzahl von Verbindungsparametern durchzuführen;
Entscheiden (S418, S518, S1018, S1118), ob der Zugriffsvorgang fehlgeschlagen ist oder nicht; und
Entscheiden (S420, S520, S1020, S1120), ob die Bestätigungsmail von dem Empfangsmailspeicher empfangen wurde oder nicht; und
wobei, wenn entschieden wird, dass die Bestätigungsmail in dem Entscheidungsschritt zurückgewiesen wurde, die Mehrzahl von Verbindungsparametern als ineffektive Parameter bestimmt werden;
wobei, wenn bestimmt wird, dass der Zugriffsvorgang in dem Entscheidungsschritt fehlgeschlagen ist, die Mehrzahl von Verbindungsparametern als ineffektive Parameter bestimmt werden; und
wobei, wenn bestimmt wird, dass die Bestätigungsmail nicht in dem Empfangsmailspeicher empfangen wurde, bestimmt wird, dass die Empfangs/Übertragungs-Vorgänge nicht normal ausgeführt werden konnten.

12. Verfahren nach Anspruch 11, bei dem, wenn bestätigt wird, dass die Bestätigungsmail nicht durch den Empfangsmailspeicher empfangen wurde, der Entscheidungsschritt zur Bestätigung des Mailempfangs des Weiteren die Schritte umfasst:
Entscheiden (S522, S1122), ob der Transceiver-Abschnitt erneut einen Zugriffsvorgang zum Zugreifen auf den Empfangsmailspeicher ausführen soll; und
Entscheiden (S523, S1123), ob eine Anzahl von Wiederholungen des Zugriffvorgangs zum Zugreifen auf den Empfangsmailspeicher bereits eine vorgegebene Anzahl von Malen übersteigt, wenn entschieden wird, dass der Transceiver-Abschnitt erneut ein Zugriffsvorgang durchführen soll; und
wobei, bei dem Entscheiden, dass die Anzahl von Wiederholungen des Zugriffvorgangs zum Zugreifen auf den Empfangsmailspeicher bereits eine vorgegebene Anzahl von Malen übersteigt, bestimmt wird, dass der Empfangsbetrieb der elektronischen Mail nicht normal durchgeführt werden konnte.

13. Verfahren nach Anspruch 8, bei dem jeder der Verbindungsparameter, der einmal eingegeben wurde, in einen neuen Verbindungsparameter geändert wird, des Weiteren die Schritte umfasst:
Eingeben (S716, S820, S918, S1024, S1127) des neuen Verbindungsparameters;
Bestimmen (S717, S821, S919, S1025, S1128), ob der Server den neuen Verbindungsparameter ohne Rebooten der Bildgebungsvorrichtung erkennen kann oder nicht; und
Rebooten (S718, S827, S925, S1031, S1134) der Bildgebungsvorrichtung in einem automatischen Modus, wenn bestimmt wird, dass der Server den neuen Verbindungsparameter nicht ohne Rebooten der Bildgebungsvorrichtung erkennen kann.

## Revendications

1. Un système pour former une image et pour communiquer des courriels électroniques, comprenant un courriel de transmission et un courriel de réception, à travers un réseau (40), comprenant :
un serveur (30), qui comprend un stockage de courriel de transmission (31) pour stocker temporairement ledit courriel de transmission à transmettre via ledit réseau, et un stockage de courriel de réception (32) pour stocker temporairement ledit courriel de réception reçu via ledit réseau ; et
un appareil de formation d'image (20), qui comprend une section émetteur-récepteur (21) pour transmettre un ensemble de données de transmission à transmettre sur ledit courriel de transmission et pour recevoir un ensemble de données de réception sur ledit courriel de réception, et une section de traitement de données (22) pour traiter ledit ensemble de données de réception reçu par ladite section émetteur-récepteur ;
dans lequel ledit serveur est couplé à la fois audit réseau et audit appareil de formation d'image, de manière à communiquer ledit ensemble de données de transmission et ledit ensemble de données de réception sur lesdits courriers électroniques à travers ledit réseau ; et
dans lequel ledit appareil de formation d'image comprend en outre:
une section de commande (25) pour saisir manuellement une pluralité de paramètres de connexion ;
un stockage de données de connexion (26) pour y stocker ladite pluralité de paramètres de connexion ; et
une section d'affichage (27) pour afficher ladite pluralité de paramètres de connexion saisie par ladite section de commande ; et
dans lequel ladite section de traitement de données détermine si ou non chacun parmi ladite pluralité de paramètres de connexion est effectif grâce à la surveillance d'un état de connexion entre ladite section d'émission-réception et ledit serveur, et envoie des premières données d'affichage pour afficher un résultat déterminé par ladite section de traitement de données à ladite section d'affichage, qui affiche ledit résultat sur un écran d' affichage ; et
dans lequel, lorsque ladite section de traitement de données détermine qu'un paramètre spécifique parmi lesdits paramètres de connexion est ineffectif, ladite section de traitement de données envoie également une deuxième donnée d'affichage pour afficher un deuxième message sollicitant une nouvelle saisie d'un nouveau paramètre de connexion correspondant à un motif d'une erreur en tant que remplacement pour ledit paramètre spécifique vers ladite section d'affichage, pour que ladite section d'affichage affiche ledit deuxième message sur ledit écran d'affichage, en fonction du besoin ;
dans lequel ladite section de traitement de données détermine si ou non ledit serveur est capable de reconnaître un nouveau paramètre de connexion, saisi de nouveau à partir de ladite section de commande, sans redémarrer ledit appareil de formation d'image ;
ledit système **caractérisé par** :
lorsque ladite section de traitement de données détermine que ledit serveur n'est pas capable de reconnaître ledit nouveau paramètre de connexion sans redémarrer ledit appareil de formation d'image, ladite section de traitement de données envoie une quatrième donnée d'affichage, pour afficher un quatrième message indiquant une nécessité de redémarrer ledit appareil de formation d'image, à ladite section d'affichage, pour que ladite section d'affichage affiche ledit quatrième message sur ledit écran d'affichage.

2. Le système selon la revendication 1,
dans lequel, lorsque ledit serveur rejette un courriel de confirmation envoyé à partir de ladite section d'émission-réception lors de ladite opération pour confirmer des connexions entre ledit serveur et ladite section d'émission-réception avec emploi de ladite pluralité de paramètres de connexion, ladite section de traitement de données détermine que ladite pluralité de paramètres de connexion, saisis à partir de ladite section de commande, sont ineffectifs.

3. Le système selon la revendication 1,
dans lequel, lorsque ladite section d'émission-réception n'arrive pas à réaliser une opération d'accès pour accéder audit stockage de courriel de réception à partir de ladite section d'émission-réception lors de ladite opération pour confirmer des connexions entre ledit serveur et ladite section d'émission-réception avec emploi de ladite pluralité de paramètres de connexion, ladite section de traitement de données détermine que ladite pluralité de paramètres de connexion, saisis à partir de ladite section de commande, sont ineffectifs.

4. Le système selon la revendication 1,
dans lequel, lors de ladite opération pour confirmer des connexions entre ledit serveur et ladite section d'émission-réception avec emploi de ladite pluralité de paramètres de connexion,
lorsque ledit serveur rejette un courriel de confirmation envoyé à partir de ladite section d'émission-réception, ou
lorsque ladite section d'émission-réception ne réussit pas à réaliser une opération d'accès pour accéder audit stockage de courriel de réception à partir de ladite section d'émission-réception,
ladite section de traitement de données détermine que ladite pluralité de paramètres de connexion, saisis à partir de ladite section de commande, sont ineffectifs, et
ladite section de traitement de données envoie également une troisième donnée d'affichage, pour afficher un troisième message indiquant une incapacité d'opération de communication normale pour lesdits courriers électroniques, vers ladite section d'affichage, pour que ladite section d'affichage affiche ledit troisième message sur ledit écran d'affichage, en fonction du besoin.

5. Le système selon la revendication 4,
dans lequel, lorsque ladite section de traitement de données confirme que ledit stockage de courriel de réception n'a pas reçu un courriel de confirmation, ladite section de traitement de données contrôle ladite section d'émission-réception afin de répéter des opérations d'accès pour accéder audit stockage de courriel de réception un nombre de fois prédéterminé à un intervalle de temps prédéterminé ; et
dans lequel, si ladite section de traitement de données confirme toujours que ledit stockage de courriel de réception n'a pas reçu un courrier de confirmation après avoir terminé ledit nombre prédéterminé desdites opérations d'accès, ladite section de traitement de données envoie ladite troisième donnée d'affichage à ladite section d'affichage.

6. Le système selon la revendication 1,
dans lequel ladite section de traitement de données détermine si ou non ledit serveur est capable de reconnaître un nouveau paramètre de connexion, saisi de nouveau à partir de ladite section de commande, sans redémarrer ledit appareil de formation d'image ; et
dans lequel, lorsque ladite section de traitement de données détermine que ledit serveur ne peut pas reconnaître ledit nouveau paramètre de connexion sans redémarrer ledit appareil de formation d'image, ladite section de traitement de données redémarre automatiquement ledit appareil de formation d'image.

7. Le système selon la revendication 1, dans lequel, lorsque lesdits paramètres de connexion sont saisis manuellement à partir de ladite section de commande, une commande de lancement de confirmation, pour lancer une opération pour confirmer des connexions entre ledit serveur et ladite section d'émission-réception, est activée avant que ladite section de traitement de données détermine si ou non chacun parmi ladite pluralité de paramètres de connexion est effectif.

8. Procédé pour l'enregistrement d'un appareil de formation d'image (20) dans un réseau (40) d'un système pour former une image et pour communiquer des courriels électroniques, comprenant un courriel de transmission et un courriel de réception, à travers ledit réseau, et ledit système comprenant un serveur (30) qui comprend un stockage de courriel de transmission (31) pour stocker temporairement ledit courriel de transmission à transmettre via ledit réseau et un stockage de courriel de réception (32) pour stocker temporairement ledit courriel de réception reçu via ledit réseau ; et ledit appareil de formation d'image qui comprend une section émetteur-récepteur (21) pour la transmission d'un ensemble de données de transmission à transmettre sur ledit courriel de transmission et pour recevoir un ensemble de données de réception sur ledit courriel de réception et une section de traitement des données (22) pour le traitement dudit ensemble de données de réception reçu par ladite section émetteur-récepteur, ledit procédé comprenant les étapes consistant à :
saisir manuellement (S110 ; S210 ; S3310 ; S411 ; S511 ; S611 ; S711 ; S811 ; S911 ; S1011 ; S1111) une pluralité de paramètres de connexion pour connecter ladite section d'émission-réception avec à la fois ledit stockage de courriel de transmission et ledit stockage de courriel de réception dudit serveur ;
déterminer (S120 ; S230 ; S413 ; S513 ; S612 ; S712 ; S813 ; S1013 ; S1113) si ou non chacun parmi lesdits paramètres de connexion est effectif par surveillance d'un état de connexion entre ladite section d'émission-réception et ledit serveur ; et
afficher un premier message (S130 ; S140 ; S270 ; S280 ; S350 ; S360 ; S421 ; S422 ; S521 ; S525 ; S613 ; S614 ; S713 ; S714 ; S817 ; S818 ; S915 ; S916 ; S1021 ; S1022 ; S1121 ; S1125) indiquant un résultat déterminé lors de ladite étape de détermination sur un écran d'affichage (27) ; et
afficher un deuxième message (S615 ; S715 ; S819 ; S917 ; S1023 ; S1126) sollicitant une nouvelle saisie dudit paramètre de connexion correspondant à un motif d'une erreur en tant que remplacement pour un paramètre spécifique parmi lesdits paramètres de connexion, lorsque il est déterminé que ledit paramètre spécifique est ineffectif lors de ladite étape de détermination ;
lorsque l'un quelconque parmi lesdits paramètres de connexion, qui a été saisi une fois, est remplacé par ledit nouveau paramètre de connexion, comprenant en outre les étapes consistant à :
saisir (S616 ; S820 ; S918 ; S1024 ; S1127) ledit nouveau paramètre de connexion ;
ledit procédé **caractérisé par** :
la détermination (S617 ; S821 ; S920 ; S1025 ; S1128) si ou non ledit serveur est capable de reconnaître ledit nouveau paramètre de connexion, sans redémarrer ledit appareil de formation d'image ; et
l'affichage (S618 ; S823 ; S921 ; S1027 ; S1130) d'un quatrième message indiquant une nécessité de redémarrer ledit appareil de formation d'image sur ledit écran d'affichage, lorsqu'il est déterminé que ledit serveur ne peut pas reconnaître ledit nouveau paramètre de connexion sans redémarrer ledit appareil de formation d'image.

9. Procédé selon la revendication 8,
dans lequel, ladite étape de détermination comprend en outre les étapes consistant à :
contrôler (S250 ; S415 ; S515 ; S815 ; S1015 ; S1115) ladite section d'émission-réception pour réaliser une opération d'envoi d'un courriel de confirmation par l'emploi de ladite pluralité de paramètres de connexion ; et
juger (S260 ; S416 ; S516 ; S816 ; S1016 ; S1116) si ou non ledit courriel de confirmation est rejeté au niveau de ladite section d'émission-réception ; et
dans lequel, lorsqu'il est jugé que ledit courriel de confirmation est rejeté à ladite étape de jugement, ladite pluralité de paramètres de connexion sont déterminés comme étant des paramètres ineffectifs.

10. Le procédé selon la revendication 8,
dans lequel ladite étape de détermination comprend en outre les étapes consistant à :
contrôler (S320 ; S417 ; S517 ; S912 ; S1017 ; S1117) ladite section d'émission-réception pour réaliser une opération d'accès pour accéder audit stockage de courriels de réception dudit serveur par l'emploi de ladite pluralité de paramètres de connexion ; et
juger (S330 ; S418 ; S518 ; S913 ; S1018 ; S1118) si ou non ladite opération d'accès est échouée ; et
dans lequel, lorsqu'il est jugé que ladite opération d'accès est échouée lors de ladite étape de jugement, ladite pluralité de paramètres de connexion sont déterminés comme étant des paramètres ineffectifs.

11. Le procédé selon la revendication 8,
dans lequel ladite étape de détermination comprend en outre les étapes consistant à :
contrôler (S415 ; S515 ; S1015 ; S1115) ladite section d'émission-réception pour réaliser une opération d'envoi d'un courriel de confirmation avec emploi de ladite pluralité de paramètres de connexion ;
juger (S416 ; S516 ; S1016 ; S1116) si ou non ledit courriel de confirmation est rejeté au niveau de ladite section d'émission-réception ;
contrôler (S417 ; S517 ; S1017 ; S1117) ladite section d'émission-réception pour réaliser une opération d'accès pour accéder audit stockage de courriel de réception dudit serveur par l'emploi de ladite pluralité de paramètres de connexion ;
juger (S418 ; S518 ; S1018 ; S1118) si ou non ladite opération d'accès échouée
; et
juger (S420 ; S520 ; S1020 ; S1120) si ou non ledit courriel de confirmation est reçu au niveau dudit stockage de courriel de réception ; et
dans lequel, lorsqu'il est jugé que ledit courriel de confirmation est rejeté à ladite étape de jugement, ladite pluralité de paramètres de connexion sont déterminés comme étant des paramètres ineffectifs ; et
dans lequel, lorsqu'il est jugé que ladite opération d'accès est échouée à ladite étape de jugement, ladite pluralité de paramètres de connexion sont déterminés comme étant des paramètres ineffectifs ; et
dans lequel, lorsqu'il est jugé que ledit courriel de confirmation n'est pas reçu par ledit stockage de courriel de réception, il est déterminé que des opérations de réception/transmission ne peuvent pas être réalisées normalement.

12. Le procédé selon la revendication 11,
dans lequel, lorsqu'il est confirmé que ledit courriel de confirmation n'est pas reçu par ledit stockage de courriel de réception, ladite étape de jugement de la réception d'un courriel de confirmation comprend en outre les étapes consistant à :
juger (S522 ; S1122) si ou non ladite section d'émission-réception devrait effectuer encore une fois une opération d'accès pour accéder audit stockage de courriel de réception ; et
juger (S523 ; S1123) si ou non un nombre de répétitions d'opérations d'accès pour accéder audit stockage de courriels de réception dépasse déjà un nombre prédéterminé de fois, lorsqu'il est jugé que ladite section d'émission-réception devrait réaliser de nouveau ladite opération d'accès ; et
dans lequel, jugeant que ledit nombre de répétitions d'opérations d'accès pour accéder audit stockage de courriel de réception dépasse déjà ledit nombre de fois prédéterminé, il est déterminé que des opérations de réception desdits courriels n'ont pas pu être réalisées normalement.

13. Le procédé selon la revendication 8, lorsque l'un quelconque parmi lesdits paramètres de connexion, qui a été saisi une fois, est remplacé par ledit nouveau paramètre de connexion, comprenant en outre les étapes consistant à :
saisir (S716 ; S820 ; S918 ; S1024 ; S1127) ledit nouveau paramètre de connexion ;
déterminer (S717 ; S821 ; S919 ; S1025 ; S1128) si ou non ledit serveur est capable de reconnaître ledit nouveau paramètre de connexion, sans redémarrer ledit appareil de formation d'image ; et
redémarrer (S718 ; S827 ; S925 ; S1031 ; S1134) ledit appareil de formation d'image en un mode automatique, lorsque il est déterminé que ledit serveur ne peut pas reconnaître ledit nouveau paramètre de connexion sans redémarrer ledit appareil de formation d'image.
